# EUROPEAN PATENT SPECIFICATION

(11) **EP 4 018 815 B1**
(45) Date of publication and mention of the grant of the patent: **14.10.2026**
(21) Application number: 21216833.0
(22) Date of filing: 22.12.2021
(51) Int. Cl.: A01F 15/08, A01B 79/00, A01D 41/127

(54) **FARMING SUPPORT SYSTEM, POSITION INFORMATION GENERATION METHOD, COMPUTER PROGRAM, AND PROCESSING DEVICE**
LANDWIRTSCHAFTSUNTERSTÜTZUNGSSYSTEM, POSITIONSINFORMATIONERZEUGUNGSVERFAHREN, COMPUTERPROGRAMM UND VERARBEITUNGSVORRICHTUNG
SYSTÈME DE SUPPORT AGRICOLE, PROCÉDÉ DE GÉNÉRATION D'INFORMATIONS DE POSITION, PROGRAMME INFORMATIQUE ET DISPOSITIF DE TRAITEMENT

(30) Priority: 24.12.2020 JP 2020215365
(43) Date of publication of application: 29.06.2022
(73) Proprietor: Kubota Corporation, Osaka-shi, Osaka 530-0011 (JP)
(72) Inventor: SASAMOTO, Hirokazu, Osaka, 5900823 (JP); NISHIDA, Yasuhiro, Osaka, 5900823 (JP)
(74) Representative: Müller-Boré & Partner Patentanwälte PartG mbB

(56) References cited:
- EP-A1- 3 251 484
- EP-A2- 3 162 189
- WO-A1-2017/058006

## Description

### BACKGROUND

The present disclosure relates to farming support systems, position information generation methods, computer programs, and processing devices.

Research and development of smart agriculture that employs information and communication technology (ICT) and the Internet of things (IoT), as the next-generation agriculture, are under way. Among the smart agriculture technologies being researched and developed is a farming support system that manages information about fields in a centralized manner on a cloud, and provides support in agriculture using data on the cloud. The farming support system allows efficient performance of general tasks required for agricultural operations, such as field management, work scheduling, work recording, management of work progress, and determination of a travel path of a work vehicle.

Grass that is used as livestock feed or the like is typically cultivated in fields, and then reaped and harvested (see, for example, Japanese Laid-Open Patent Publication No. 2019-004729). In grass harvest work, first of all, a tractor with a mower, which is a machine for cutting grass, travels in a field, so that grass grown on the field is cut by the mower. Next, a tractor with a tedder, which is a device for scattering cut grass, travels in the field, so that the cut grass is stirred and dispersed by the tedder. The stirring and dispersion of the grass allows the grass to dry better.

Next, a tractor with a rake implement, which is a device for collecting cut grass, travels in the field, so that the rake implement collects the grass to form a swath (a row of collected grass). Thereafter, a tractor with a baler, which is a device for compressing the cut grass into compact bales travels in the field. The baler collects the grass contained in the swath into itself, and forms a bale having a predetermined shape from the collected grass. The bale, which is a mass of grass, is in the shape of, for example, a cylinder or cuboid. The formation of the bale allows the harvested grass to be easily carried out of the field.

Document EP 3 162 189 A1 describes an agricultural material baling system comprising a bale forming component configured to form a bale of agricultural material from a field, and a control system configured to determine that the bale is to be released from the baling system onto the field, determine that a current location of the baling system has a slope above a threshold, determine a different location, that is spaced apart from the current location, for releasing the bale onto the field, and provide an output indicative of the different location.

### SUMMARY

Farming support systems that manage grass in fields are required to obtain and use information about the positions of swaths in fields.

The claimed invention is defined by the features set forth in the appended independent claim. Additional embodiments of the claimed invention are defined by the dependent claims.

According to the claimed invention, a positional relationship (geometry) between a reference point and a swath in a local coordinate system (vehicle coordinate system) which is moved together with a work vehicle and a rake implement, is obtained. Based on the obtained positional relationship and a position in a geographic coordinate system detected by a positioning device, swath position information indicating the position of a formed swath in the geographic coordinate system is generated. When the positional relationship between the reference point and a swath in the local coordinate system is known, swath position information indicating the position of the formed swath in the geographic coordinate system can be generated using the positioning device. When the position of the formed swath in the geographic coordinate system is known, the position of the swath can be "visualized," which facilitates setting of a travel path for a work of forming a bale.

### BRIEF DESCRIPTION OF THE DRAWINGS

FIG. **1** is a schematic diagram showing an example of a configuration of a farming support system according to an embodiment of the present disclosure.
FIG. **2** is a side view schematically illustrating a tractor and a rake implement according to an embodiment of the present disclosure.
FIG. **3** is a plan view schematically illustrating a tractor and a rake implement according to an embodiment of the present disclosure.
FIG. **4** is a side view schematically illustrating a tractor and a baler according to an embodiment of the present disclosure.
FIG. **5** is a plan view schematically illustrating a tractor and a baler according to an embodiment of the present disclosure.
FIG. **6** is a block diagram illustrating an example of a hardware configuration of a farming support system according to an embodiment of the present disclosure.
FIG. **7** is a block diagram illustrating an example of a hardware configuration of a tractor, a rake implement, and a baler according to an embodiment of the present disclosure.
FIG. **8** is a flowchart illustrating an example of a process of generating swath position information according to an embodiment of the present disclosure.
FIG. **9** is a diagram illustrating a positional relationship between a reference point and a swath in a local coordinate system according to an embodiment of the present disclosure.
FIG. **10** is a diagram illustrating an example of first positional relationship information indicating a positional relationship between a reference point and a position of a swath in a local coordinate system according to an embodiment of the present disclosure.
FIG. **11** is a diagram illustrating an example of azimuth information, reference point position information, and swath position information according to an embodiment of the present disclosure.
FIG. **12** is a diagram illustrating a single swath formed by joining two swaths together according to an embodiment of the present disclosure.
FIG. **13** is a diagram illustrating a display device displaying a map of a field indicating a position of a swath according to an embodiment of the present disclosure.
FIG. **14** is a diagram illustrating another method of obtaining a positional relationship between a reference point and a swath in a local coordinate system according to an embodiment of the present disclosure.
FIG. **15** is a diagram illustrating an example of work vehicle information and rake implement information according to an embodiment of the present disclosure.
FIG. **16** is a diagram illustrating still another method of obtaining a positional relationship between a reference point and a swath in a local coordinate system according to an embodiment of the present disclosure.
FIG. **17** is a diagram illustrating an example of an inter-reference position correction value that is information about a positional relationship between two reference positions in a local coordinate system according to an embodiment of the present disclosure.
FIG. **18** is a diagram illustrating still another method of obtaining a positional relationship between a reference point and a swath in a local coordinate system according to an embodiment of the present disclosure.
FIG. **19** is a diagram illustrating an example of an inter-reference position correction value that is information about a positional relationship between a reference point and a reference position in a local coordinate system according to an embodiment of the present disclosure.
FIG. **20** is a diagram illustrating an example of geographic coordinates of an end and a center in a transverse direction of a swath according to an embodiment of the present disclosure.
FIG. **21** is a diagram illustrating a range in which a rake implement collects grass according to an embodiment of the present disclosure.
FIG. **22** is a diagram illustrating an example of rake implement information including grass range information according to an embodiment of the present disclosure.
FIG. **23** is a diagram illustrating an example of first swath information according to an embodiment of the present disclosure.
FIG. **24** is a diagram illustrating an example of grass range information for each rake implement model according to an embodiment of the present disclosure.
FIG. **25** is a diagram illustrating an example of grass information according to an embodiment of the present disclosure.
FIG. **26** is a diagram illustrating a display device displaying a map of a field and grass information according to an embodiment of the present disclosure.
FIG. **27** is a diagram illustrating an example of second swath information according to an embodiment of the present disclosure.
FIG. **28** is a diagram illustrating a positional relationship between a reference point and a position of a swath in a local coordinate system according to an embodiment of the present disclosure.
FIG. **29** is a diagram illustrating an example of first positional relationship information indicating a positional relationship between a reference point and a position of a swath in a local coordinate system according to an embodiment of the present disclosure.
FIG. **30** is a diagram illustrating a range in which a rake implement including two grass collectors collects grass according to an embodiment of the present disclosure.
FIG. **31** is a diagram illustrating rake implement information including grass range information according to an embodiment of the present disclosure.
FIG. **32** is a diagram illustrating an example of a travel path for a tractor and a baler according to an embodiment of the present disclosure.
FIG. **33** is a diagram illustrating a positional relationship between a reference point and a position where a baler picks up grass in a local coordinate system according to an embodiment of the present disclosure.
FIG. **34** is a diagram illustrating an example of second positional relationship information indicating a positional relationship between a reference point and a reference position in a local coordinate system according to an embodiment of the present disclosure.
FIG. **35** is a diagram illustrating identification information of a bale, time information indicating the start time and end time of formation of the bale, and bale position information according to an embodiment of the present disclosure.
FIG. **36** is a diagram illustrating an example of first bale information according to an embodiment of the present disclosure.
FIG. **37** is a diagram illustrating an example of second bale information according to an embodiment of the present disclosure.

### DETAILED DESCRIPTION

Embodiments of the present disclosure will be described below. To avoid unnecessarily obscuring the present disclosure, well-known features may not be described or substantially the same elements may not be redundantly described, for example. This is for ease of understanding the present disclosure. The present inventor provides the accompanying drawings and the following description to allow a person skilled in the art to thoroughly understand the present disclosure. These are not intended to limit the subject matter as set forth in the appended claims. In the description that follows, like elements are indicated by like reference signs.

The following embodiments are illustrative, and a farming support system according to the present disclosure is not limited thereto. For example, numerical values, shapes, materials, steps, and the order of the steps, etc., indicated in the following embodiments are merely illustrative, and various modifications can be made thereto unless a technical contradiction occurs. The embodiments can be used in various combinations unless a technical contradiction occurs.

### Farming Support System

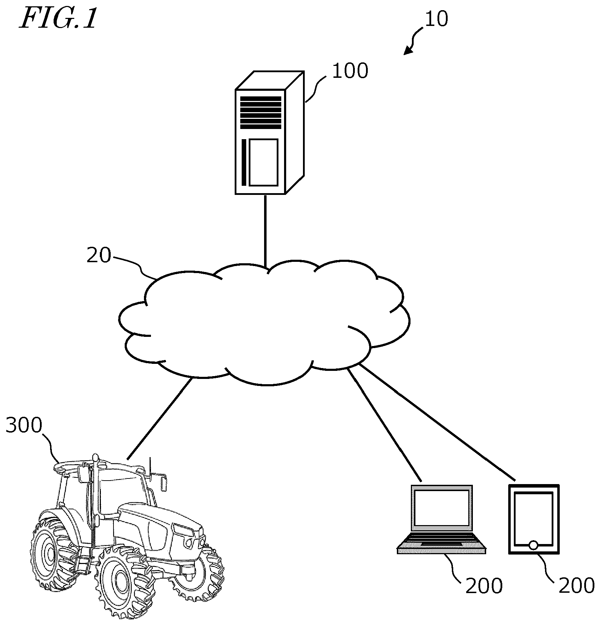

FIG. **1** is a schematic diagram showing an example of a configuration of a farming support system **10** according to this embodiment. The farming support system **10** has various functions for providing support in agricultural works related to grass. The farming support system **10** is substantially implemented as a computer system. In the farming support system **10,** a server computer **100** (hereinafter denoted as a "server **100"),** one or more user terminal devices **200,** and one or more work vehicles **300** (e.g., a tractor) can be connected through a network **20** to communicate with each other. The network **20** is, but not limited to, the Internet, for example. The numbers of user terminal devices **200** and work vehicles **300** connected to the network **20** are not particularly limited. FIG. **1** illustrates an example in which two user terminal devices **200,** such as a laptop PC and a tablet computer, and one work vehicle **300** are connected to the network **20.** The present disclosure is not limited to this. In the description that follows, it is assumed that the work vehicle **300** is a tractor, and the work vehicle **300** is referred to as a "tractor **300."**

In the farming support system **10** of this embodiment, managements related to grass cultivated in a field can be carried out. As described above, in harvest work of grass grown on a field, the grass may be cut using a mower, the cut grass may be stirred and dispersed using a tedder, swaths may be formed using a rake implement, and bales may be formed using a baler. The cutting of grass using a mower and the stirring and dispersion of grass using a tedder can be carried out using conventional techniques, and will not herein be described in detail. In the farming support system **10** of this embodiment, position information indicating a position of a swath formed in a field using a rake implement is generated. Firstly, a tractor and a rake implement will be described.

### Tractor and Rake Implement

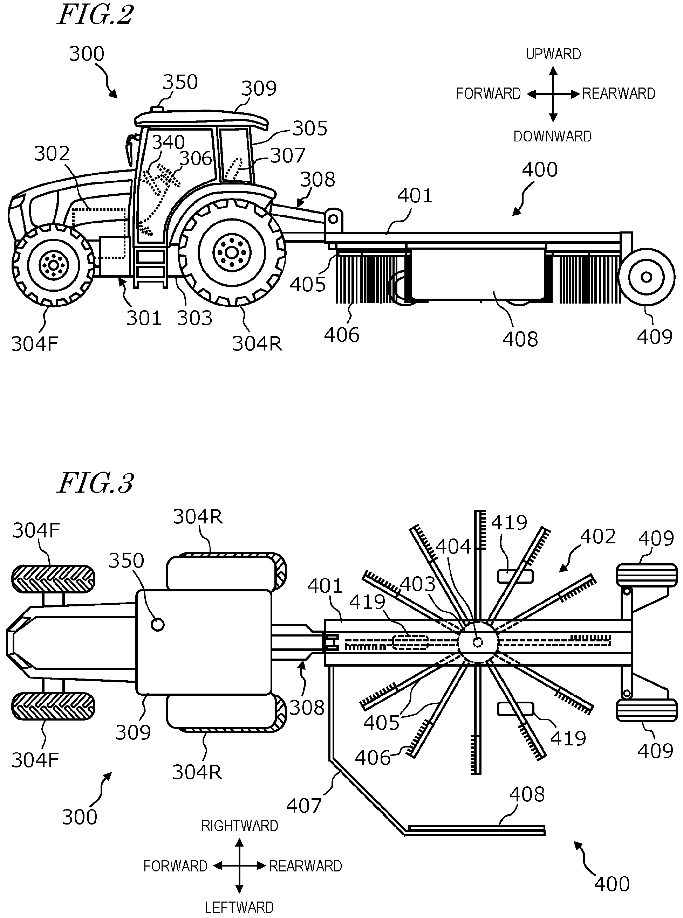

FIG. **2** is a side view schematically illustrating a tractor **300** and a rake implement **400.** FIG. **3** is a plan view schematically illustrating the tractor **300** and the rake implement **400.** In this embodiment, the terms "forward," "rearward," "leftward," "rightward," "upward," and "downward" each have a meaning that is defined in relation to a user who is sitting in the driver's seat of a work vehicle, facing the steering wheel. The work vehicle in the present disclosure is not limited to work vehicles that are driven by a user sitting therein. In work vehicles such as an unmanned, automatic-traveling tractor, no driver's seat or steering wheel is always required. In such a work vehicle, the terms "forward" and "rearward" mean the "direction of forward movement" and the "direction of rearward movement," respectively, that are defined as a central direction of steering. The terms "upward" and "downward" mean the "upward direction" and "downward direction," respectively, along the vertical direction. The terms "leftward" and "rightward" mean the "leftward direction" and "rightward direction," respectively, that are defined in relation to a straight line passing through the geometric center of a work vehicle as viewed from above the work vehicle and extending in the "front-back" direction.

The tractor **300** includes a vehicle body **301,** an engine **302,** and a transmission **303.** The vehicle body **301** is provided with a pair of front wheels **304F,** a pair of rear wheels **304R,** and a cabin **305.** In the cabin **305,** a steering device **306,** a driver's seat **307,** and an operation device **340.** A positioning device **350** is provided in or on a roof **309** at an upper portion of the cabin **305.** The positioning device **350** is capable of detecting a position (geographic coordinates of a "reference point" described below) of the tractor **300** in a geographic coordinate system. The tractor **300** may include a crawler instead of the front wheel **304F** and the rear wheel **304R.** The tractor **300** may include a crawler instead of one of the front wheel **304F** and the rear wheel **304R.**

The engine **302** is, for example, a diesel engine. Instead of the diesel engine, an electric motor may be used. The transmission **303** is capable of changing the propelling force and travel speed of the tractor **300** by changing gear ratios. The transmission **303** is also capable of allowing the tractor **300** to switch between forward movement and rearward movement.

The steering device **306** includes a steering wheel, a steering shaft connected to the steering wheel, and a power steering device that provides support in steering of the steering wheel. The front wheels **304F** are a steered wheel. By changing the steering angle of the front wheels **304F,** the direction in which the tractor **300** travels can be changed. The steering angle of the front wheels **304F** can be changed by operating the steering wheel. The power steering device includes a hydraulic device or electric motor that supplies an assistive force for changing the steering angle of the front wheels **304F.** When automatic traveling or automatic steering is performed, the steering angle can be automatically adjusted by the force of a hydraulic device or electric motor under the control of an electronic control unit (ECU) provided in the tractor **300.**

A coupling device **308** is provided at a rear portion of the vehicle body **301.** The coupling device **308** includes, for example, a three-point hitch (also referred to as a three-point linkage), a power take-off (PTO) shaft, and a universal joint. The coupling device **308** can be used to removably attach an implement to the tractor **300.** In the examples illustrated in FIGS. **2** and **3****,** the implement is the rake implement **400.** The rake implement **400** collects grass in a field to form a swath.

Power can be transmitted from the tractor **300** to the rake implement **400** through the PTO shaft and the universal joint. When the rake implement **400** is attached to the three-point hitch, the position or orientation of the rake implement **400** can be controlled by lifting or lowering the three-point hitch using, for example, a hydraulic device. The rake implement **400** is drawn and moved by the tractor **300** to form a swath.

The rake implement **400** includes a frame **401** that is coupled to the coupling device **308** of the tractor **300,** a grass collector **402,** and a pair of wheels **409.** The grass collector **402** includes a body **403** that is attached to the frame **401,** a rotating shaft **404** that is rotatably supported by the body **403,** a plurality of tine arms **405** connected to the rotating shaft **404,** and a wheel **419.** Each tine arm **405** is provided with a plurality of tines **406.** The tine **406** is a member having a bifurcated tip. The rotation of the PTO shaft of the tractor **300** is transmitted to the rotating shaft **404** through a drive shaft supported by the frame **401,** so that the rotating shaft **404** is rotated. The rotation of the rotating shaft **404** drives the plurality of tine arms **405** to rotate, so that grass is collected by the tines **406.**

In the example illustrated in FIG. **3****,** a screen **408** is disposed on the left side of the grass collector **402** and spaced a predetermined distance apart from the grass collector **402.** The screen **408** is supported by a supporting arm **407** extending from the frame **401.** The plurality of tine arms **405** of the grass collector **402** collect grass while rotating anticlockwise as viewed from above the rake implement **400.** The screen **408** receives the grass collected by the grass collector **402,** so that a swath is formed between the grass collector **402** and the screen **408.**

The structure of the rake implement **400** is not limited to that described above, and may be any device that collects grass to form a swath. For example, the rake implement **400** may include two or more grass collectors **402.** The grass collector **402** may be a rotary device in which the rotating shaft **404** extends generally in parallel to a plane spreading in the forward, rearward, leftward, and rightward directions, or a belt/chain device in which a plurality of tines **406** are attached to a rotating belt or chain, or other types of devices.

### Baler

Next, a baler will be described.

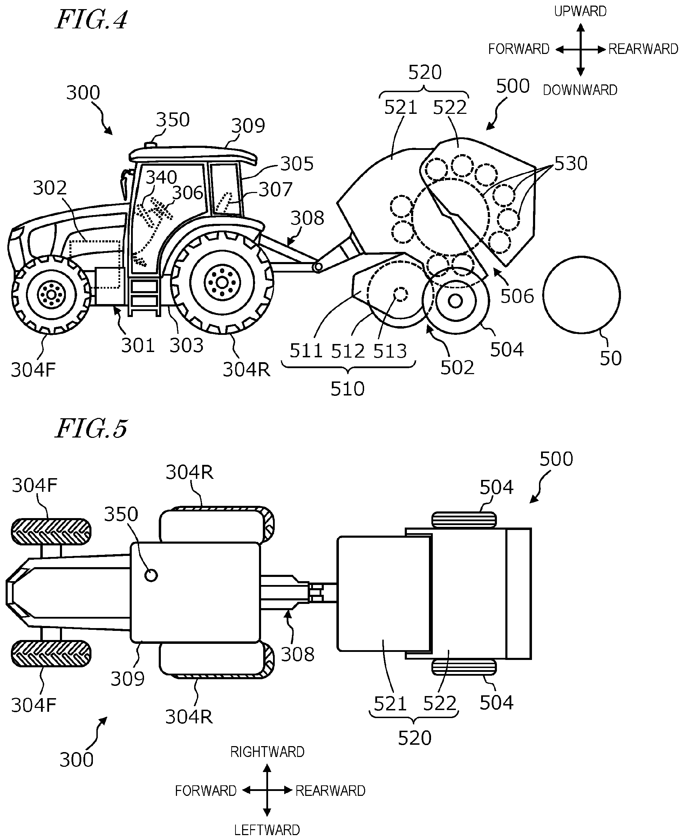

FIG. **4** is a side view schematically illustrating a tractor **300** and a baler **500.** FIG. **5** is a plan view schematically illustrating the tractor **300** and the baler **500.** The baler **500** can be drawn by the tractor **300** to collect grass contained in a swath, and can shape the collected grass into a predetermined shape to form a bale. Examples of the baler **500** include round balers, whole crops, and hay balers. In FIGS. **4** and **5****,** a round baler is illustrated as the baler **500.**

The baler **500** includes a vehicle body **502** that is coupled to the coupling device **308** of the tractor **300,** and an pick-up part **510** that is supported by the vehicle body **502.** The vehicle body **502** is provided with wheels **504.** The pick-up part **510** picks up grass from the front (on the side that the tractor **300** is positioned), a casing **511** that is open to the front, a rotating shaft **513** that is supported by the casing **511,** and a guide tool **512** that is fixed to the rotating shaft **513.** The rotation of the guide tool **512** allows grass in a field to be loaded into the casing **511.**

The baler **500** includes a chamber **520** that is supported by the vehicle body **502,** and a forming part **530** that is disposed in the chamber **520.** Grass picked up by the pick-up part **510** is loaded into the chamber **520.** The chamber **520** has a first compartment **521** that is fixed to the vehicle body **502,** and a second compartment **522** that is allowed to pivot in relation to the first compartment **521.** The first compartment **521** is in communication with the pick-up part **510** so that grass picked up by the pick-up part **510** is loaded into the chamber **520.**

The forming part **530** shapes grass that has been loaded into the chamber **520.** The forming part **530** forms a round bale **50** using, for example, a plurality of rotating rollers. The forming part **530** may be a chain device that shapes grass into a roll using a chain, a belt device that shapes grass into a roll using a belt, or other types of devices.

When the second compartment **522** is pivoted upward in relation to the first compartment **521,** a discharge opening **506** is formed between the first compartment **521** and the second compartment **522.** The bale **50** formed by the forming part **530** is discharged from the discharge opening **506.**

It should be noted that the coupling device **308** of the tractor **300** may be provided at a front portion of the vehicle body **301.** In that case, an implement such as a rake implement or a baler is coupled to the front portion of the tractor **300.**

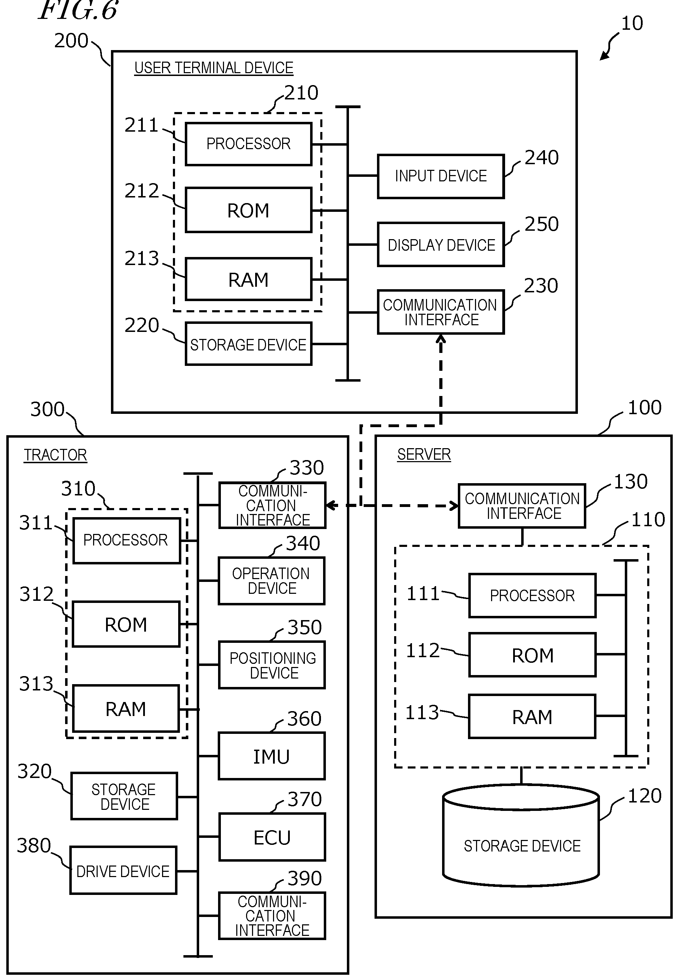

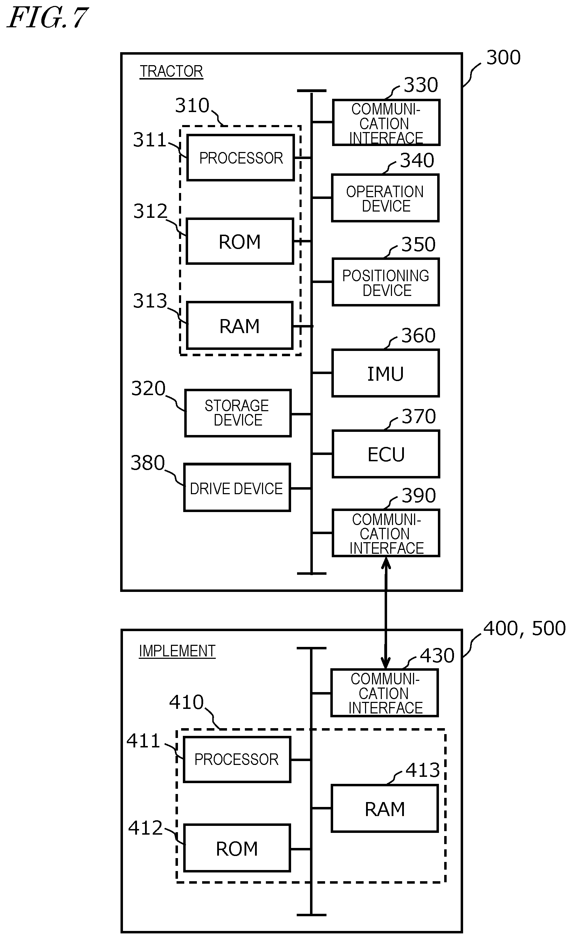

Next, an example of a hardware configuration of the farming support system **10** will be described. FIG. **6** is a block diagram illustrating an example of a hardware configuration of the farming support system **10.** FIG. **7** is a block diagram illustrating an example of a hardware configuration of the tractor **300,** the rake implement **400,** and the baler **500.**

### Server

The server **100** may be a computer that is provided away from the tractor **300,** such as a cloud server or edge server. The server **100** includes a processing device **110,** a storage device **120,** and a communication interface **130.** The server **100** serves as a cloud server that manages information about fields in a centralized manner, and provides support in agriculture using the managed data.

The processing device **110** includes a processor **111,** and storage media such as a read only memory (ROM) **112** and a random access memory (RAM) **113.** The ROM **112** may store a computer program (or firmware) that causes the processor **111** to execute processes. The computer program may be provided to the server **100** through a storage medium (e.g., a semiconductor memory or optical disc) or an electrical communication line (e.g., the Internet). Such a computer program may be made commercially available as commercial software.

The processor **111** is a semiconductor integrated circuit such as a central processing unit (CPU). The processor **111** may be implemented by a microprocessor or microcontroller. The processor **111** sequentially executes the computer program stored in the ROM **112,** in which instructions for executing various processes are written, to carry out the desired processes.

The processor **111** may be a field programmable gate array (FPGA), graphics processing unit (GPU), application specific integrated circuit (ASIC), or application specific standard product (ASSP) with a CPU mounted thereon, or a combination of two or more selected from these circuits.

The ROM **112** is, for example, a writable memory (e.g., a PROM), a rewritable memory (e.g., a flash memory), or a read-only memory. The ROM **112** stores a computer program that controls operations of the processor **111.** The ROM **112** may not necessarily be a single storage medium, or may be a set of storage media. A portion of the set of storage media may be removable.

The RAM **113** provides a work area into which the computer program of the ROM **112** will be temporarily loaded during boot-up. The RAM **113** may not necessarily be a single storage medium, and may be a set of storage media.

The storage device **120** mainly serves as a storage for a database. The storage device **120** is, for example, a cloud storage. The storage device **120** is, for example, a magnetic storage device, an optical storage device, a semiconductor storage device, or a combination thereof. Examples of the optical storage device include optical disk drives and magneto-optical disk (MD) drives. Examples of the magnetic storage device include hard disk drives (HDDs). Examples of the semiconductor storage device include solid-state drives (SSDs). The storage device **120** may be an external storage device connected to the server **100** through a network. Rake implement information is stored in the storage device 120 included in the rake implement or the farming support system 10 comprises the storage device 120 configured to store the rake implement information about a plurality of models of the rake implements. The storage device **120** may store other various kinds of information such as information about the map of a field and position information about the position of a swath, which are described below.

The communication interface **130** is a communication module for communication with the user terminal device **200** and the tractor **300** through the network **20.** The communication interface **130** allows wired communication and/or wireless communication. The communication interface **130** allows wired communication compliant with a communication standard, such as USB, IEEE 1394 (registered trademark), or Ethernet (registered trademark). The communication interface **130** allows wireless communication compliant with, for example, the Bluetooth (registered trademark) standard and/or the Wi-Fi (registered trademark) standard. These standards include a wireless communication standard that uses the 2.4 GHz or 5.0 GHz frequency band. The communication interface **130** may allow wireless communication that uses a mobile-phone network or a satellite communication system.

### User Terminal Device

The user terminal device **200** is, for example, a personal computer (PC), tablet computer, smartphone, or personal digital assistant (PDA). In FIG. **1****,** a laptop PC and a tablet computer are illustrated as an example of the user terminal device **200.**

As illustrated in FIG. **6****,** the user terminal device **200** includes a processing device **210,** a storage device **220,** a communication interface **230,** an input device **240,** and a display device **250.** These constituent elements are connected through a bus so as to communicate with each other.

The processing device **210** includes a processor **211,** a ROM **212,** and a RAM **213.** The processor **211,** the ROM **212,** the RAM **213,** and the storage device **220** are similar to the processor **111,** the ROM **112,** the RAM **113,** and the storage device **120** of the server **100,** and therefore, will not herein be described in detail.

The input device **240** converts instructions from the user into data, which are in turn input to the computer. The input device **240** is, for example, a keyboard, a mouse, a touch panel, or a combination thereof. The display device **250** is, for example, a liquid crystal display or an organic light-emitting diode (OLED) display.

The communication interface **230** is a communication module for communication with the server **100** and the tractor **300** through the network **20.** The communication interface **130** allows wired communication and/or wireless communication. For example, as with the communication interface **130,** the communication interface **230** allows wired communication compliant with a communication standard, such as USB, IEEE 1394 (registered trademark), or Ethernet (registered trademark). As with the communication interface **130,** the communication interface **230** allows wireless communication compliant with the Bluetooth (registered trademark) standard and/or the Wi-Fi (registered trademark) standard. The communication interface **230** may be a communication module that allows wireless communication compliant with the Bluetooth Low Energy (BLE) or Low Power Wide Area (LPWA) communication technology. The communication technology such as BLE or LPWA can be used to implement long-range and wide-area communication with low power consumption. The communication interface **230** may allow wireless communication that uses a mobile-phone network or a satellite communication system.

### Tractor

As illustrated in FIG. **6****,** the tractor **300** includes a processing device **310,** a storage device **320,** a communication interface **330,** an operation device **340,** a positioning device **350,** an inertial measurement device (IMU) **360,** an electronic control unit **370,** a drive device **380,** and a communication interface **390.** These constituent elements are connected through a bus so as to communicate with each other.

The processing device **310** includes a processor **311,** a ROM **312,** and a RAM **313.** The processor **311,** the ROM **312,** the RAM **313,** and the storage device **320** are similar to the processor **111,** the ROM **112,** the RAM **113,** and the storage device **120** of the server **100,** and therefore, will not herein be described in detail.

The communication interface **330** is a communication module for communication with the server **100** and the user terminal device **200** through the network **20.** The communication interface **330** allows wireless communication compliant with, for example, the Bluetooth (registered trademark) standard and/or the Wi-Fi (registered trademark) standard. The communication interface **330** may be a communication module that allows wireless communication that uses the BLE or LPWA communication technology. The communication interface **330** may allow wireless communication that uses a mobile-phone network or a satellite communication system.

The operation device **340** is used by the user to perform operations related to various movements of the tractor **300.** The operation device **340** may include a virtual terminal (VT). For example, the user uses the operation device **340** to perform operations related to automatic traveling or automatic steering of the tractor **300.** The operation device **340** may include a display device such as a touchscreen and/or one or more switches. By operating the operation device **340,** the user can perform various operations such as on/off switching of the automatic traveling mode or the automatic steering mode, setting of the initial position of the tractor 300, setting of a path, recording or editing of an environmental map, and on/off switching of works performed by an implement (implement). The operation device **340** may also display various kinds of information such as operation states of a work vehicle and an implement.

The positioning device **350** is capable of detecting the position (geographic coordinates) of the tractor **300** in a geographic coordinate system. The term "geographic coordinates" means a position in, for example, a geographic coordinate system in which positions on Earth are represented using a latitude and a longitude, or a projected coordinate system in which three-dimensional coordinates on Earth are projected onto a two-dimensional plane, and positions on Earth are represented using X-Y coordinates. In Japan, geographic coordinates may be represented using coordinates in the planar orthogonal coordinate system defined in the Survey Act.

The positioning device **350** includes an antenna that receives a global navigation satellite system (GNSS) signal from a GNSS satellite, and a processing circuit. The positioning device **350** receives a GNSS signal from a GNSS satellite, and performs positioning based on the GNSS signal. GNSS collectively refers to satellite-based positioning systems, such as the global positioning system (GPS), the quasi-zenith satellite system (QZSS, for example, Michibiki), GLONASS, Galileo, and BeiDou.

The positioning device **350** performs interference positioning, such as real-time kinematic (RTK) GPS. In the case of RTK positioning, the positioning device **350** includes an RTK receiver. The positioning device **350** receives a GNSS signal transmitted from a GNSS satellite and a correction signal transmitted from a reference station, and performs positioning based on these signals. Interference positioning, such as RTK positioning, allows positioning that provides an accuracy such that position errors are a few centimeters. The high-precision positioning generates position information containing information about a latitude, a longitude, and an altitude.

Any positioning technique that can provide position information having a required accuracy (interference positioning, relative positioning, etc.) may be used. For example, positioning may also be performed using a virtual reference station (VRS) or a differential global positioning system (DGPS). In the case in which position information having a required accuracy is obtained without the aid of a correction signal transmitted from a reference station, the correction signal may not be used to generate position information.

The IMU **360** includes an acceleration sensor, an angular acceleration sensor, and a magnetic sensor, and outputs a signal indicating an movement amount, an orientation, and an attitude. For example, the IMU **360** includes a triaxial acceleration sensor and a triaxial gyroscope. The IMU **360** can serve as a motion sensor which outputs a signal indicating various quantities of the tractor **300,** such as an acceleration, velocity, displacement, orientation, and attitude. The IMU **360** outputs such a signal at a frequency of several tens to several thousands of times per second, for example. Instead of the IMU **360,** a triaxial acceleration sensor, triaxial gyroscope, and magnetic sensor may be separately provided. The positioning device **350** and the IMU **360** may be integrated into a single unit, which is in turn provided in the tractor **300.**

The drive device **380** includes various devices required for traveling of the tractor **300** and driving of the implements **400** and **500,** such as the engine **302,** the transmission **303,** the steering device **306,** the coupling device **308,** etc., of the tractor **300.** The engine **302** includes an internal combustion engine, such as a diesel engine. The drive device **380** may include an electric motor for traction in addition to or instead of the internal combustion engine.

The ECU **370** controls operations of the drive device **380.** The ECU **370** controls operations of the drive device **380,** based on signals output from the positioning device **350** and the IMU **360,** and a preset planned travel path, etc. The ECU **370** may be implemented by a plurality of ECUs. The ECU **370** may include the processing device **310.**

### Implements

As illustrated in FIG. **7****,** the rake implement **400** includes a processing device **410** and a communication interface **430.** These constituent elements are connected through a bus so as to communicate with each other. The processing device **410** includes a processor **411,** a ROM **412,** and a RAM **413.** The processor **411,** the ROM **412,** and the RAM **413** are similar to the processor **311,** the ROM **312,** and the RAM **313** of the tractor **300,** and therefore, will not herein be described in detail.

The communication interface **390** of the tractor **300** and the communication interface **430** of the rake implement **400** are a communication module for communication between the tractor **300** and the rake implement **400.** For example, in the case of communication compliant with a communication control standard such as ISOBUS based on ISO 11783, bidirectional communication can be carried out between the tractor **300** and the rake implement **400.** In the case in which the tractor **300** and the rake implement **400** support a tractor-implement management (TIM) system, such as ISOBUS-TIM, the rake implement **400** can be controlled from the tractor **300,** and vice versa. These communications are either wired communication or wireless communication.

As with the rake implement **400,** the baler **500** includes a processing device **410** and a communication interface **430.** As with the rake implement **400,** the baler **500** may perform, with the tractor **300,** communication compliant with a communication control standard such as ISOBUS. In the case in which the tractor **300** and the baler **500** support the TIM system, the baler **500** can be controlled from the tractor **300,** and vice versa.

Next, operations of the farming support system **10** will be described in detail. Firstly, an operation of generating swath position information indicating the position of a swath will be described.

### Process of Generating Swath Position Information

As described above with reference to FIGS. **2** and **3****,** the tractor **300** is provided with the positioning device **350.** The positioning device **350** of this embodiment performs positioning based on a GNSS signal transmitted from a GNSS satellite and a correction signal transmitted from a reference station to generate position information. The positioning device **350** detects the position of a predetermined point (reference point) in the tractor **300** such as the position where the positioning device **350** is disposed. As described above with reference to FIG. **3****,** a swath is to be formed between the grass collector **402** and the screen **408** of the rake implement **400.** There is a deviation between the position detected by the positioning device **350** and the position of the swath formed by the rake implement **400.** Therefore, in this embodiment, the position information output by the positioning device **350** is corrected so as to identify the position of the swath.

A plurality of types of rake implements may be attached to the tractor **300.** Different rake implements have different body sizes and different positions where a swath is formed. Therefore, the position information may be corrected in different manners for different rake implement models.

After a swath is formed by the rake implement **400,** the baler **500** (FIG. **4****)** forms a bale **50.** If the position information of the swath in the field has been obtained, the travel path (guidance line) of the tractor **300** and the baler **500** can be set based on that position information. If the map of the field is displayed together with the position of the swath on the display device, the user can visually recognize the position of the swath.

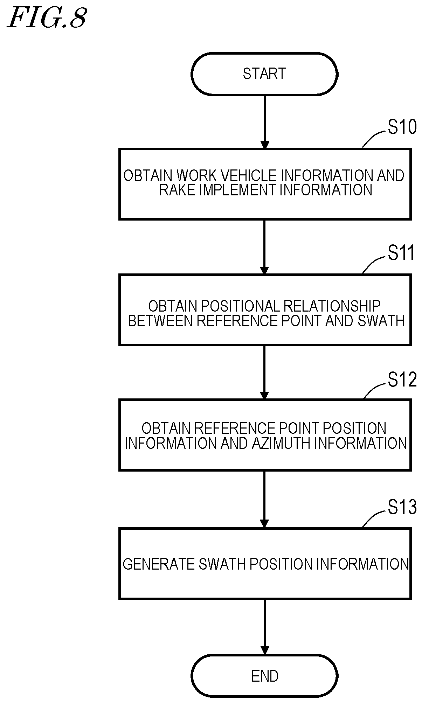

FIG. **8** is a flowchart illustrating an example of a process of generating swath position information.

The process of FIG. **8** is mainly executed by the processing device **110** (FIG. **6****)** of the server **100.** The processing device **110** initially obtains work vehicle information about a tractor **300,** and rake implement information about a rake implement **400** attached to the tractor **300** (step **S10).** The work vehicle information includes specific information that can be used to identify, for example, the model of the tractor **300.** The specific information includes, for example, the model number of the tractor **300.** The rake implement information includes specific information that can be used to identify, for example, the model of the rake implement **400.** The specific information includes, for example, the model number of the rake implement **400.**

The rake implement information is previously stored in a storage device (e.g., the ROM **412** (FIG. **7****))** included in the rake implement **400.** As described above, the tractor **300** and the rake implement **400** are capable of performing communication compliant with a communication control standard, such as ISOBUS.

When the rake implement **400** is attached to the tractor **300,** the processor **411** reads the rake implement information from the ROM **412,** and outputs the rake implement information to the communication interface **430.** The rake implement information is transmitted from the rake implement 400 to the work vehicle 300 when the rake implement 400 is attached to the work vehicle 300 and the processing device 310 is configured to obtain the rake implement information from the work vehicle 300. Alternatively, model information indicating the model of the rake implement 400 is transmitted from the rake implement 400 to the work vehicle 300 when the rake implement 400 is attached to the work vehicle 300 and the processing device 310 is configured to obtain the model information from the work vehicle 300, and obtain, from the storage device 320, the rake implement information corresponding to the model indicated by the model information. Particularly, the rake implement information is transmitted from the communication interface **430** to the communication interface **390** of the tractor **300.** The communication interface **390** receives and outputs the rake implement information to the processor **311.** The processor **311** outputs the received rake implement information to the server **100** through the communication interface **330** (FIG. **6****).**

The work vehicle information is previously stored in a storage device (e.g., the ROM **312** or the storage device **320)** included in the tractor **300.** The processor **311** reads the work vehicle information from the ROM **312** or the storage device **320,** and outputs the work vehicle information to the server **100** through the communication interface **330.** The processor **111** of the server **100** stores the received work vehicle information and rake implement information in the storage device **120.**

Based on the work vehicle information and the rake implement information, the processor **111** obtains information about a positional relationship between a reference point to be positioned by the positioning device **350** and a swath **40** to be formed by the rake implement **400,** in a local coordinate system that is defined for the tractor **300** and the rake implement **400** when the tractor **300** and the rake implement **400** are attached together (step **S11).** The local coordinate system is moved together with the tractor **300** and the rake implement **400.** The local coordinate system is also referred to as a vehicle coordinate system.

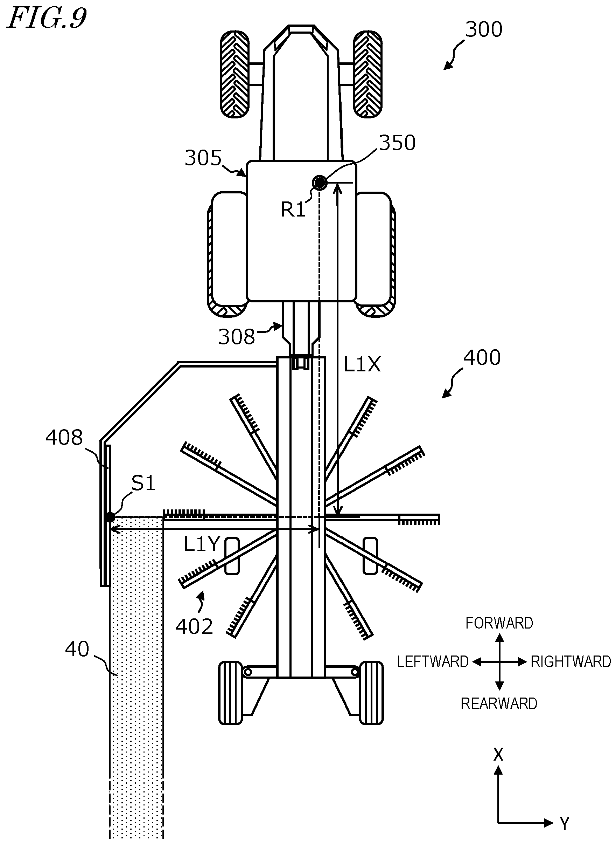

FIG. **9** is a diagram illustrating a positional relationship between the reference point **R1** and the swath **40** in the local coordinate system. In the local coordinate system of the present disclosure, the X and Y directions are defined as the longitudinal (front-back) and lateral (left-right) directions, respectively, of the tractor **300** and the rake implement **400** when the tractor **300** and the rake implement **400** are attached together and travel straight on a flat ground. The +X direction is defined as a direction from back to front, and the +Y direction is defined as a direction from left to right. Concerning device geometry, ISO 11783 indicates that "the X axis is specified as positive in normal driving direction," and "the Y axis is specified as positive to the right of the normal driving direction." The X and Y directions in the local coordinate system of the present disclosure are defined based on the definitions of device geometry. The unit of coordinate values in the local coordinate system is not particularly limited, and is herein, for example, millimeter.

In the local coordinate system of the tractor **300** alone and the local coordinate system of the rake implement **400** alone, the X and Y directions and the unit of coordinate values are defined in a manner similar to that described above.

The reference point **R1** in the local coordinate system may be set at any position in the tractor **300.** In the example illustrated in FIG. **9****,** the reference point **R1** is set at the position where the positioning device **350** is disposed. The swath **40** is to be formed between the grass collector **402** and the screen **408** of the rake implement **400.** In the example illustrated in FIG. **9****,** a position **S1** of the swath **40** is set at a position on the screen **408** that is opposite the grass collector **402.**

As illustrated in FIG. **9****,** the position **S1** of the swath **40** is located a length of L1X behind the reference point **R1,** and a length of L1Y to the left of the reference point **R1.** When the values of L1X and L1Y are known, the position of the swath **40** in the geographic coordinate system can be calculated from the position information of the reference point **R1** detected by the positioning device **350.**

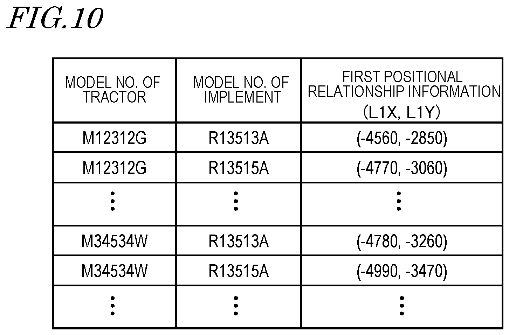

FIG. **10** is a diagram illustrating an example of first positional relationship information indicating a positional relationship (first positional relationship) between the reference point **R1** and the position **S1** of the swath **40** in the local coordinate system. The first positional relationship information is previously stored in the storage device **120** of the server **100.** When the models of the tractor and the rake implement are known, the values of L1X and L1Y can be previously specified. The values of L1X and L1Y may be previously specified for each of combinations of a plurality of tractor models and a plurality of rake implement models. The values of L1X and L1Y may be actually measured, or may be calculated based on the design values. The model of each tractor and the model of each rake implement may, for example, be represented by a model number (no.). The first positional relationship information of FIG. **10** indicates a positional relationship for each of combinations of a plurality of tractor models and a plurality of rake implement models. The positional relationship is based on the reference point **R1,** and therefore, the values of L1X and L1Y are negative.

For example, in the case in which the model number of the tractor **300** is "M12312G" and the model number of the rake implement **400** is "R13513A," the processor **111** reads the first positional relationship information associated with the combination of these model numbers from the storage device **120.** In the case in which the model number of the tractor **300** is "M12312G" and the model number of the rake implement **400** is "R13513A," the positional relationship is represented by (L1X, L1Y) = (-4560, -2850). This positional relationship means that in the local coordinate system, the position **S1** of the swath **40** is located 4560 mm behind the reference point **R1** and 2850 mm to the left of the reference point **R1.**

During the work of forming the swath **40** using the rake implement **400,** the positioning device **350** detects the position of the reference point **R1** in the geographic coordinate system, while the IMU **360** (FIG. **6****)** detects the azimuth of the travel direction of the tractor **300.** The position in the geographic coordinate system is, for example, represented by a latitude and a longitude. The azimuth is, for example, represented by a clockwise angle with reference to true north. The processor **311** of the tractor **300** generates reference point position information indicating the position of the reference point **R1** and azimuth information indicating the azimuth of the travel direction using output signals of the positioning device **350** and the IMU **360.** The processor **311** outputs the reference point position information and the azimuth information together with time information indicating the time that the position of the reference point **R1** and the azimuth of the travel direction were detected to the server **100.** The time information is, for example, generated by the processor **311,** or alternatively, may be generated by other devices. The processor **111** of the server **100** stores the received reference point position information, azimuth information, and time information in the storage device **120** (step **S12** of FIG. **8****).**

The processor **111** calculates the position **S1** of the swath **40** in the geographic coordinate system using the reference point position information, the azimuth information, and the first positional relationship information (FIG. **10****),** and generates swath position information indicating the position of the swath **40** in the geographic coordinate system (step **S13).**

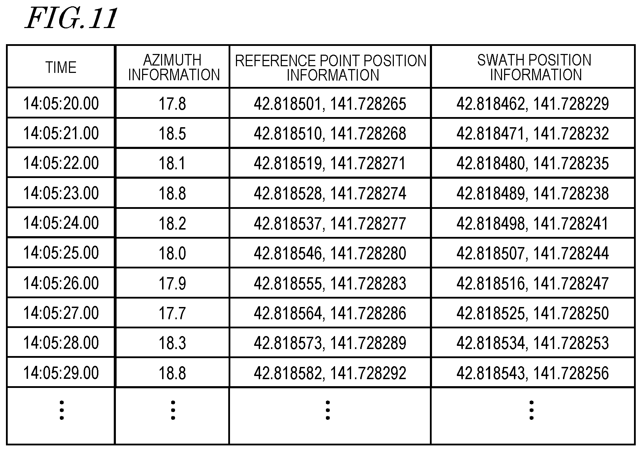

FIG. **11** is a diagram illustrating an example of the azimuth information, the reference point position information, and the swath position information. For ease of understanding, FIG. **11** shows the azimuth, the position of the reference point **R1,** and the position **S1** of the swath **40** taken at intervals of one second.

The intervals at which the positioning device **350** detects the position are not particularly limited, and may be one second, for example. The intervals at which the positioning device **350** detects the position are either shorter or longer than one second. During the period of time between when the positioning device **350** detects the position and when the positioning device **350** next detects the position, the position may be estimated using an output signal of the IMU **360** to interpolate the reference point position information.

As described above, the IMU **360** is capable of outputting a signal indicating the attitude of the tractor **300.** In the case in which the travel path has undulations and slopes, the attitudes of the tractor **300** and the rake implement **400** may be tilted, so that a deviation may occur in geographic coordinates detected by the positioning device **350.** The processor **111** may correct the geographic coordinates according to the magnitude of the tilt of the tractor **300** obtained from an output signal of the IMU **360.**

The processor **111** converts the positional relationship (FIG. **10****)** between the reference point **R1** and the position **S1** of the swath **40** in the local coordinate system into a positional relationship in the geographic coordinate system using the azimuth information. The processor **111** can calculate the latitude and longitude of the position **S1** of the swath **40** using the converted positional relationship and the latitude and longitude of the reference point **R1.** The swath position information indicates the calculated latitude and longitude of the position **S1** of the swath **40.** Information indicating the latitude and longitude of the reference point **R1** at a time point can be used to calculate the latitude and longitude of the position **S1** of the swath **40** at the same time point.

The rake implement **400** of FIG. **9** forms the swath **40** on the left side of the rake implement **400.** After forming one swath **40** in a field, the tractor **300** and the rake implement **400** may turn to the left, and travels along the swath **40** that was formed immediately before to newly form another swath **40.** In that case, the two swaths can be joined together to form a single swath.

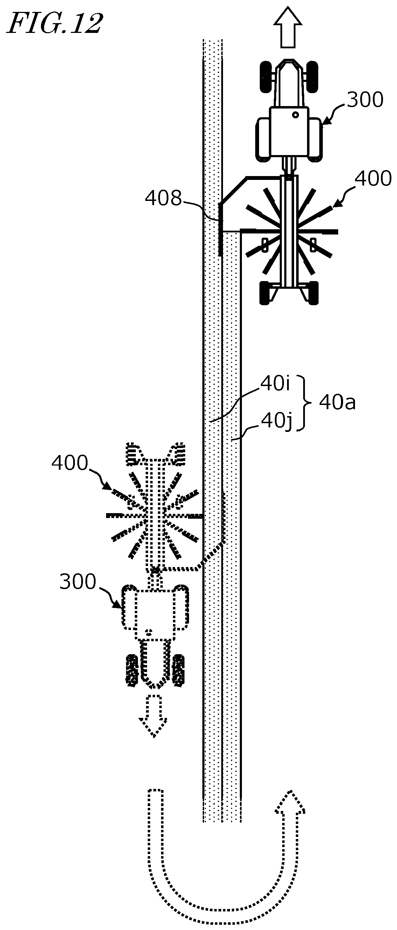

FIG. **12** is a diagram illustrating a single swath **40a** formed by joining two swaths **40i** and **40j** together. After the production of the swath **40i** of FIG. **12****,** the tractor **300** and the rake implement **400** turn to the left. The other swath **40j** is newly formed with the screen **408** being brought into contact with an end of the swath **40i,** so that the single swath **40a** can be formed in which the swaths **40i** and **40j** are joined together.

As the swath position information of the swath **40a,** the swath position information of one of the swaths **40i** and **40j** may be used. The processor **111** may calculate a position between the positions of the swaths **40i** and **40j** indicated by the swath position information to generate the swath position information of the swath **40a.**

The processes of steps **S10** to **S13** of FIG. **8** may be performed either during the work of forming the swath **40** or after completion of the work of forming the swath **40.** In the case in which the processes of steps **S10** to **S13** are performed after completion of the work of forming the swath **40,** the processor **311** of the tractor **300** (FIG. **6****)** previously stores the reference point position information, the azimuth information, and the time information in the storage device **320.** After completion of the work of forming the swath **40,** the processor **311** reads the work vehicle information, the rake implement information, the reference point position information, azimuth information, and the time information from the storage device **320,** and outputs these pieces of information to the server **100.** The processor **111** of the server **100** may perform the processes of steps **S10 to S13** using the received information to generate the swath position information.

As described above, in this embodiment, the positional relationship (geometry) between the reference point **R1** and the swath **40** in the local coordinate system (vehicle coordinate system), which is moved together with the tractor **300** and the rake implement **400,** is obtained. Based on the obtained positional relationship and the position in the geographic coordinate system detected by the positioning device **350,** the swath position information indicating the position of the formed swath **40** in the geographic coordinate system is generated. When the positional relationship between the reference point **R1** and the swath **40** in the local coordinate system is known, the swath position information indicating the position of the formed swath **40** in the geographic coordinate system can be generated using the positioning device **350.**

When the position of the formed swath **40** in the geographic coordinate system is known, the position of the swath **40** can be "visualized," which facilitates setting of a travel path for the work of forming the bale **50.**

During the work of forming the swath **40,** the swath position information can be obtained using information about the position detected by the positioning device **350.** Therefore, it is not necessary to separately perform the work of measuring the position of the swath **40** using a sensor and a camera, etc., after the formation of the swath **40.**

If a map of the field indicating the position of the swath is displayed or visualized on the display device **250** of the user terminal device **200** (FIG. **6****),** the user is allowed to visually recognize the position of the swath.

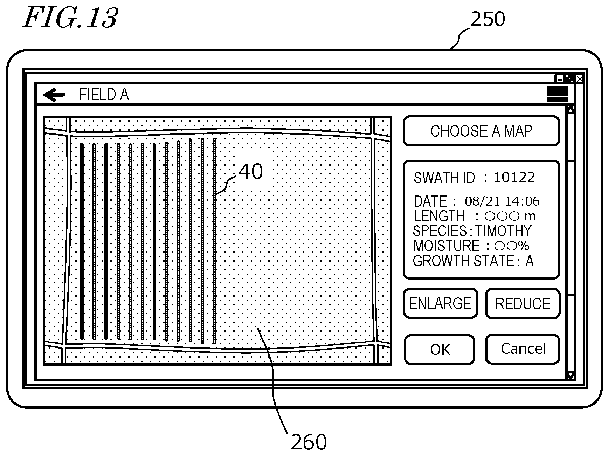

FIG. **13** is a diagram illustrating the display device **250** when a field map **260** indicating the position of the swath **40** is displayed on the display device **250.** The storage device **120** of the server **100** previously stores map information of a field. The map information includes information about geographic coordinates of areas indicated by a map. The processor **111** associates coordinates indicated by the swath position information with the map information to generate swath map information for visually indicating the position of a swath. The processor **111** stores the generated swath map information in the storage device **120.**

The processor **211** of the user terminal device **200** downloads the swath map information from the server **100,** and stores the swath map information in the storage device **220.** The processor **211** reads the swath map information from the storage device **220,** and causes the display device **250** to display the field map **260** indicating the position of the swath **40,** according to the user's instruction through the input device **240.** The position of the swath **40** is displayed on the field map **260,** which allows the user to visually recognize the position of the swath **40.**

As described above with reference to FIG. **12****,** when two swaths are joined together to form a single swath **40a,** the position of the swath **40a** is displayed on the field map **260.** A swath obtained by joining two swaths together can be easily distinguished from a swath which is not a set of two swaths by giving different pieces of identification information thereto.

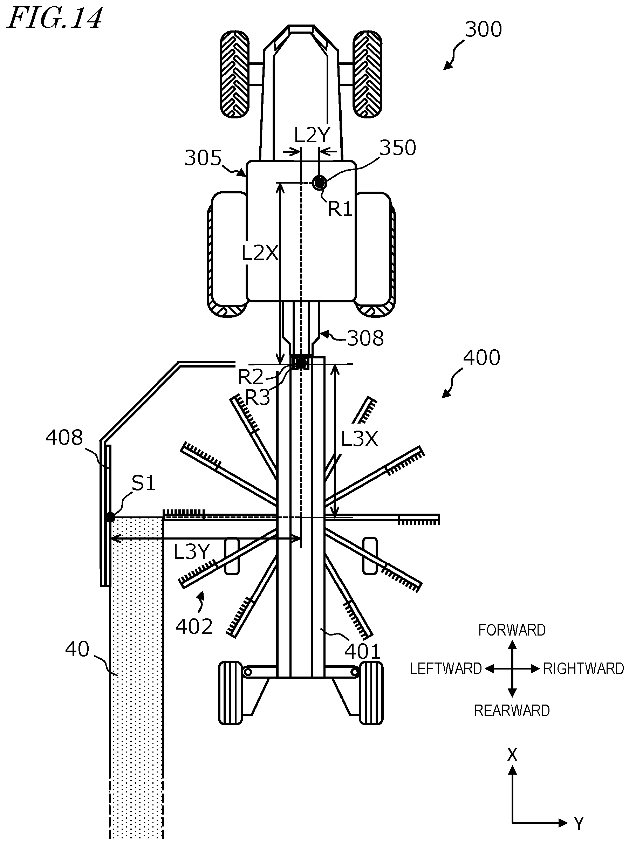

Next, another method of obtaining the positional relationship between the reference point **R1** and the swath **40** in the local coordinate system will be described. FIG. **14** is a diagram illustrating the positional relationship between the reference point **R1** and the swath **40** in the local coordinate system.

In the example illustrated in FIG. **14****,** a reference position **R2** in the tractor **300** is provided separately from the reference point **R1.** The reference position **R2** is set at any position in the tractor **300.** In this example, the reference position **R2** is set at a position in the coupling device **308** where the rake implement **400** is connected to the coupling device **308.** In the rake implement **400,** a reference position **R3** for the rake implement **400** is set. The reference position **R3** is set at any position in the rake implement **400.** In this example, the reference position **R3** is set at a position in the frame **401** where the frame **401** is coupled to the coupling device **308.**

In the local coordinate system that is defined for the tractor **300** and the rake implement **400** when the tractor **300** and the rake implement **400** are attached together, the reference positions **R2** and **R3** may be substantially the same. For example, the reference position **R2** may be set at a position in the coupling device **308** where a hitch pin is inserted through the coupling device **308,** and the reference position **R3** is set at a position in the frame **401** where that hitch pin is inserted through the frame **401,** the reference positions **R2** and **R3** are substantially the same. The hitch pin is inserted through both of the coupling device **308** and the frame **401** when the frame **401** is coupled to the coupling device **308.** As used herein, it is assumed that the reference positions **R2** and **R3** are the same.

As illustrated in FIG. **14****,** the reference position **R2** is located a length of L2Y to the left of the reference point **R1** and a length of L2X behind the reference point **R1.** The position **S1** of the swath **40** is located at a length of L3X behind the reference position **R3** and a length of L3Y to the left of the reference position **R3.**

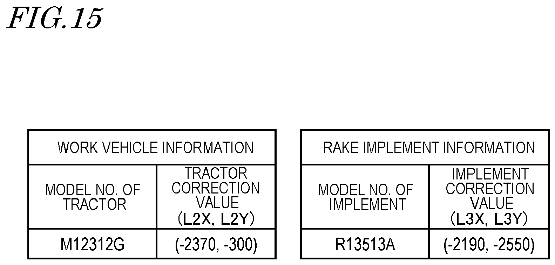

FIG. **15** is a diagram illustrating an example of the work vehicle information and the rake implement information. In the example illustrated in FIG. **15****,** the work vehicle information includes the model number of the tractor **300,** and a tractor correction value that is information indicating a positional relationship between the reference point **R1** and the reference position **R2** in the local coordinate system. The rake implement information includes the model number of the rake implement **400,** and an implement correction value that is information indicating a positional relationship between the reference position **R3** and the position **S1** of the swath **40** in the local coordinate system.

The rake implement **400** outputs the rake implement information to the tractor **300.** The tractor **300** outputs the work vehicle information and the rake implement information to the server **100.** The processor **111** of the server **100** can calculate the positional relationship (first positional relationship) between the reference point **R1** and the position **S1** of the swath **40** in the local coordinate system using the work vehicle information and the rake implement information.

The respective tractor correction values of a plurality of tractor models, and the respective implement correction values of a plurality of rake implement models, may be previously stored in the storage device **120** of the server **100.** The processor **111** of the server **100** may read the tractor correction value corresponding to the model number of the tractor **300,** and the implement correction value corresponding to the model number of the rake implement **400,** from the storage device **120,** and calculate the first positional relationship.

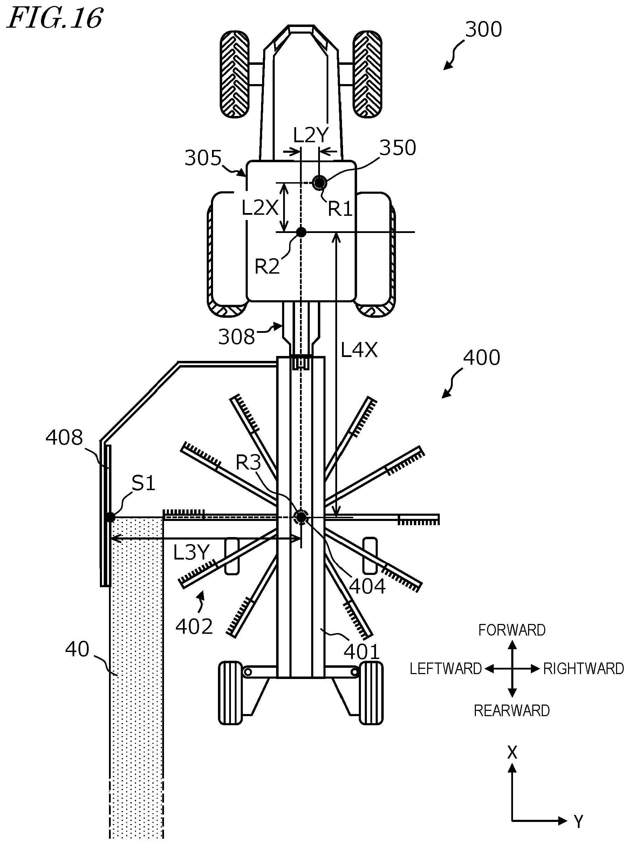

FIG. **16** is a diagram illustrating still another method of obtaining the positional relationship between the reference point **R1** and the swath **40** in the local coordinate system. In the example illustrated in FIG. **16****,** the reference position **R2** is set at the position of a center in the lateral direction of the tractor **300.** The reference position **R3** is set at the position of a center in the lateral direction of the frame **401** of the rake implement **400.**

The reference position **R2** in the local coordinate system may be previously specified for each tractor model. The reference position **R3** in the local coordinate system may be previously specified for each rake implement model. When the tractor model and the rake implement model are known, the positional relationship between the reference positions **R2** and **R3** can be previously specified.

As illustrated in FIG. **16****,** the reference position **R3** is located a length of L4X behind the reference position **R2.** The position **S1** of the swath **40** is located a length of L3Y to the left of the reference position **R3.**

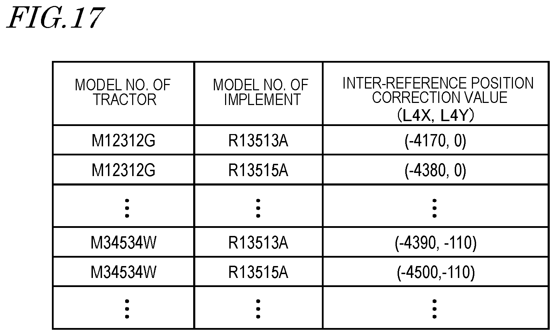

FIG. **17** is a diagram illustrating an example of an inter-reference position correction value that is information about the positional relationship between the reference positions **R2** and **R3** in the local coordinate system. The inter-reference position correction value is previously stored in the storage device **120** of the server **100.**

The processor **111** of the server **100** can calculate the positional relationship between the reference point **R1** and the position **S1** of the swath **40** in the local coordinate system using the work vehicle information, which includes the model number and tractor correction value of the tractor **300,** the rake implement information, which includes the model number and implement correction value of the rake implement **400,** and the inter-reference position correction value.

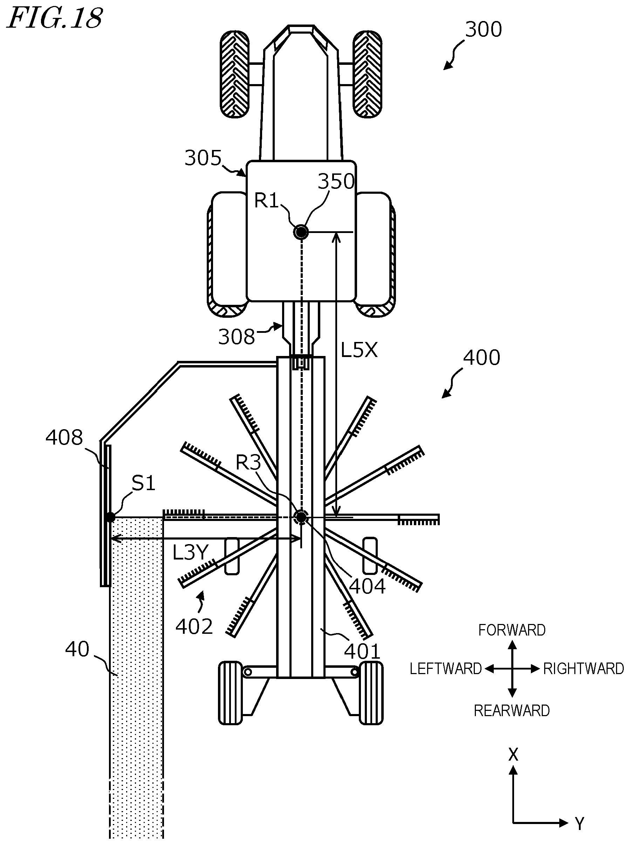

FIG. **18** is a diagram illustrating still another method of obtaining the positional relationship between the reference point **R1** and the swath **40** in the local coordinate system. In the example illustrated in FIG. **18****,** the reference point **R1** is set at the position of a center in the lateral direction of the tractor **300.** The reference position **R3** is set at the position of a center in the lateral direction of the frame **401** of the rake implement **400.** When the tractor model and the rake implement model are known, a positional relationship between the reference point **R1** and the reference position **R3** can be previously specified. As illustrated in FIG. **18****,** the reference position **R3** is located a length of L5X behind the reference point **R1.**

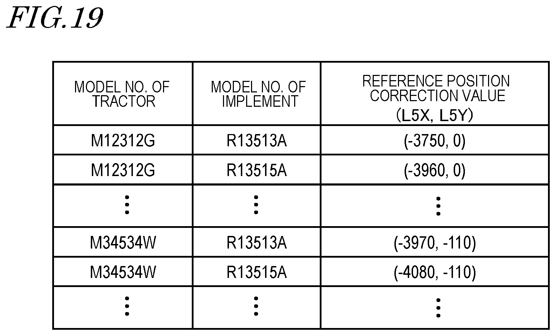

FIG. **19** is a diagram illustrating an example of a reference position correction value that is information about the positional relationship between the reference point **R1** and the reference position **R3** in the local coordinate system. The reference position correction value is previously stored in the storage device **120** of the server **100.**

The processor **111** of the server **100** can calculate the positional relationship between the reference point **R1** and the position **S1** of the swath **40** in the local coordinate system using the work vehicle information, which includes the model number of the tractor **300,** the rake implement information, which includes the model number and implement correction value of the rake implement **400,** and the reference position correction value.

As described above, the swath **40** is to be formed between the grass collector **402** and the screen **408** of the rake implement **400.** In the above example, the position **S1** of the swath **40** is set at a position on the screen **408** that is opposite the grass collector **402** (FIG. **14****),** or alternatively, may be set at other positions. For example, the position **S1** may be set at a position on the grass collector **402** that is opposite the screen **408,** or at the position of a center in the traverse direction (the Y direction in the local coordinate system) of the swath **40.** The transverse direction of the swath **40** is perpendicular to the direction in which the swath **40** extends in the field.

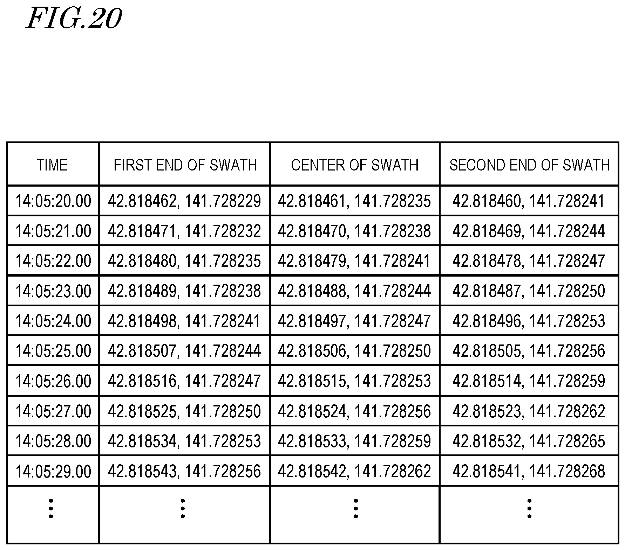

A width of the swath **40** can be previously specified for each model of the rake implement **400.** When the geographic coordinates of any position in the swath **40** in the transverse direction thereof are known, the geographic coordinates of other positions in the transverse direction can be calculated. FIG. **20** is a diagram illustrating an example of the geographic coordinates of an end and a center in the transverse direction of the swath **40.** A first end of the swath corresponds to a position on the screen **408** that is opposite the grass collector **402.** Position information about the first end of the swath is the same as the swath position information of FIG. **11****.** The positions of a center and a second end on the opposite side from the first end of the swath **40** can be calculated from the swath position information.

### Position of Grass

Next, a process of associating the position of the swath **40** with a position of grass collected to form the swath **40,** will be described.

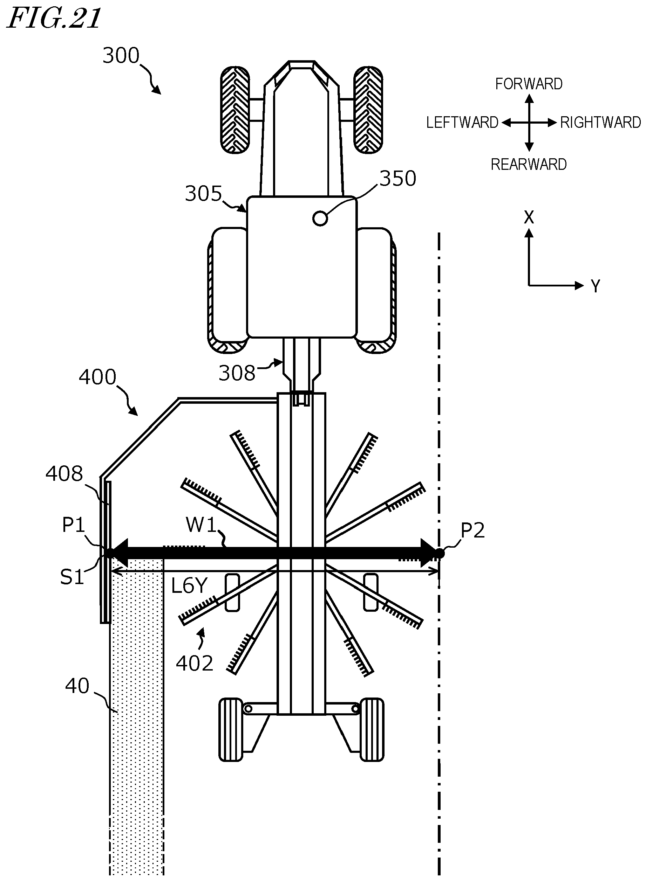

FIG. **21** is a diagram illustrating a range **W1** in which the rake implement **400** collects grass. As described above, the grass collector **402** of the rake implement **400** is turned to collect grass. The screen **408** receives the grass collected by the grass collector **402,** so that the swath **40** is formed between the grass collector **402** and the screen **408.** The range **W1** in which grass is collected is defined as the range between a position **P1** on the screen **408** that is opposite the grass collector **402,** and a position **P2** of an end on the opposite side of the grass collector **402** from the screen **408,** in the lateral direction (Y direction) of the rake implement **400.**

In the case in which the position **S1** set at a position on the screen **408** that is opposite the grass collector **402,** the position **P1** may be the same as the position **S1.**

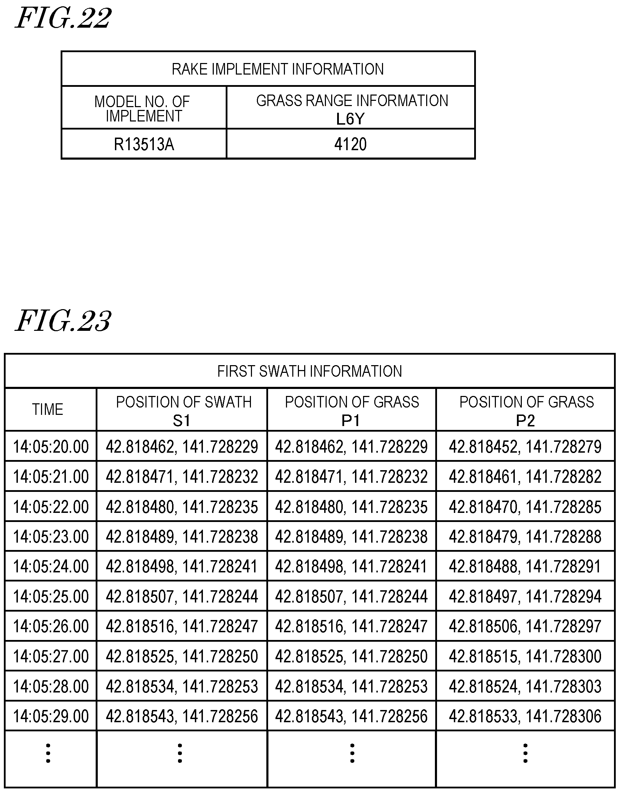

FIG. **22** is a diagram illustrating the rake implement information including grass range information. The grass range information indicates a length in the Y direction of the range **W1** in which grass is collected in the local coordinate system. The rake implement information is previously stored in the ROM **412** (FIG. **7****)** in the rake implement **400.** As described above, the rake implement information is output to the server **100** through the tractor **300.** The processor **111** of the server **100** calculates the positions **P1** and **P2** of grass in the geographic coordinate system using the swath position information and the grass range information. The processor **111** generates first swath information indicating a relationship between the position of the swath **40** and the position of grass collected to form the swath **40** in the geographic coordinate system.

FIG. **23** is a diagram illustrating an example of the first swath information. In the example illustrated in FIG. **23****,** it is assumed that the position **P1** is the same as the position **S1.** The range **W1** in which grass is collected in the geographic coordinate system is defined as the range between the geographic coordinates of the positions **P1** and **P2.**

When the relationship between the position of the swath **40** and the position of grass collected to form the swath **40** is known, it is possible to find the position in the field of the grass that is contained in the swath **40** at a specific position in the swath **40.**

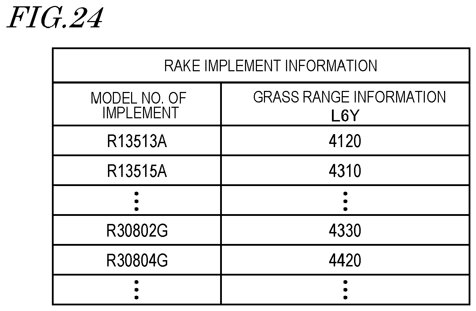

For each rake implement model, the grass range information may be previously stored in the storage device **120** of the server **100.** FIG. **24** is a diagram illustrating the grass range information for each rake implement model. The processor **111** may read the grass range information associated with the model number of a rake implement **400** attached to a tractor **300** from the storage device **120,** and generate the first swath information.

In the case in which two swaths **40i** and **40j** are joined together to form a single swath **40a** (FIG. **12****),** the processor **111** combines the first swath information of the swath **40i** with the first swath information of the swath **40j** to generate the first swath information of the swath **40a.** The first swath information of the swath **40a** includes both information about the position of grass collected to form the swath **40i** and information about the position of grass collected to form the swath **40j.**

### Grass Information

Next, a process of associating the position of the swath **40** with grass information about grass will be described.

The storage device **120** of the server **100** previously stores the grass information (first grass information) for each predetermined area of the field. For example, the grass information indicates the species, moisture content, and growth state of grass in each predetermined area. The grass information may be obtained by observing grass in the field using an unmanned aerial vehicle, such as a drone, or by observing grass while driving a vehicle such as a tractor in the field. For example, grass may be observed during the above-mentioned work of cutting grass using a mower.

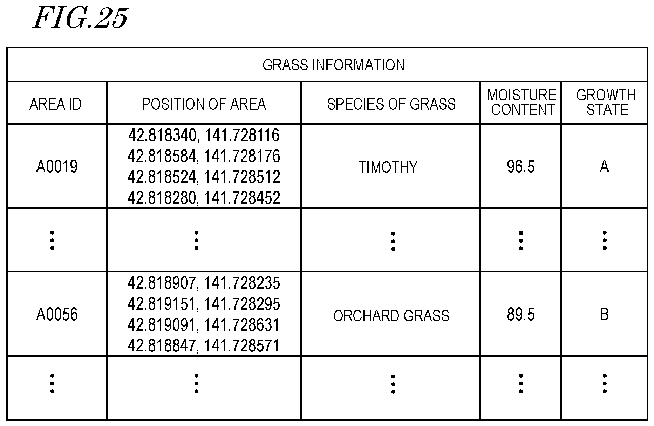

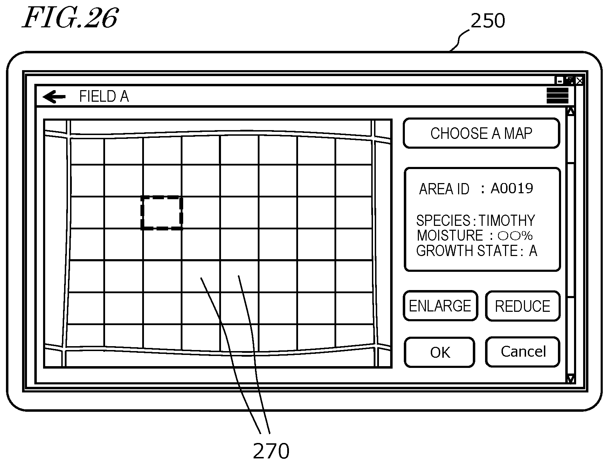

FIG. **25** is a diagram illustrating an example of the grass information. FIG. **26** is a diagram illustrating the display device **250** when the display device **250** displays a map of a field and the grass information. The field is divided into a plurality of areas **270.** The grass information is assigned to each area **270.** The grass information includes identification information of an area **270,** information about the position of the area **270,** and the species, moisture content, and growth state, etc., of grass. For example, in the case in which the area **270** has a rectangular shape, the position of the area may be represented by the geographic coordinates of the four vertices. The grass information is generated by assigning the above pieces of information obtained by observing grass as described above to each area **270.** The grass information may include information about the date and time that the species, moisture content, and growth state of grass were observed.

The grass information is displayed together with the field map showing the plurality of areas **270** on the display device **250,** which allows the user to check the state of grass in each area **270.** When the user chooses one of the plurality of areas **270** displayed on the display device **250,** the identification information of the chosen area **270,** and the species, moisture content, growth state, etc., of grass in that area **270** are displayed on the display device **250.**

As described above, the field map information includes information about geographic coordinates. The processor **111** extracts the grass information of an area **270** corresponding to the range **W1** between the positions **P1** and **P2,** which is indicated by the first swath information (FIG. **23****).** The processor **111** generates second swath information in which the position of the swath **40** is associated with the grass information, using the extracted grass information, and the swath position information indicated by the first swath information (FIG. **23****).**

In the case in which the range **W1** covers two or more areas **270,** the processor **111** extracts the grass information of the two or more areas **270.** In that case, the processor **111** generates the second swath information including the grass information of the two or more areas **270.**

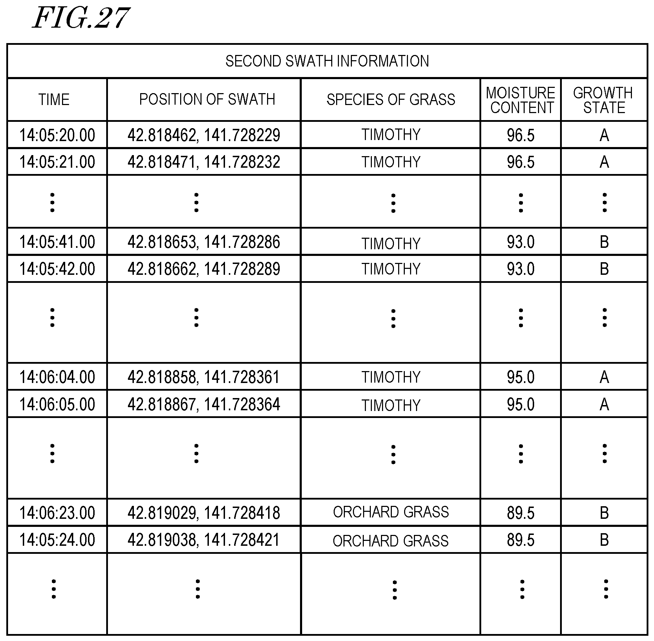

FIG. **27** is a diagram illustrating an example of the second swath information. The second swath information indicates the species, moisture content, and growth state of grass at each position in the swath **40.** The second swath information may include information about the date and time that the species, moisture content, growth state, etc., of grass were observed.

The association of the position of the swath **40** with the grass information allows obtaining of information about grass contained in the swath **40** at a specific position in the swath **40.** For example, as described above, the species, moisture content, growth state, etc., of grass contained in the swath **40** can be known.

As illustrated in FIG. **13****,** the field map **260** displayed on the display device **250** indicates a plurality of swaths **40.** When the user chooses one from the plurality of swaths **40,** the identification information of the chosen swath **40,** and the species, moisture content, growth state, etc., of grass in that swath **40,** are displayed. As a result, the user can know the state of grass in each swath **40.**

Next, a rake implement **400** including two or more grass collectors **402** will be described.

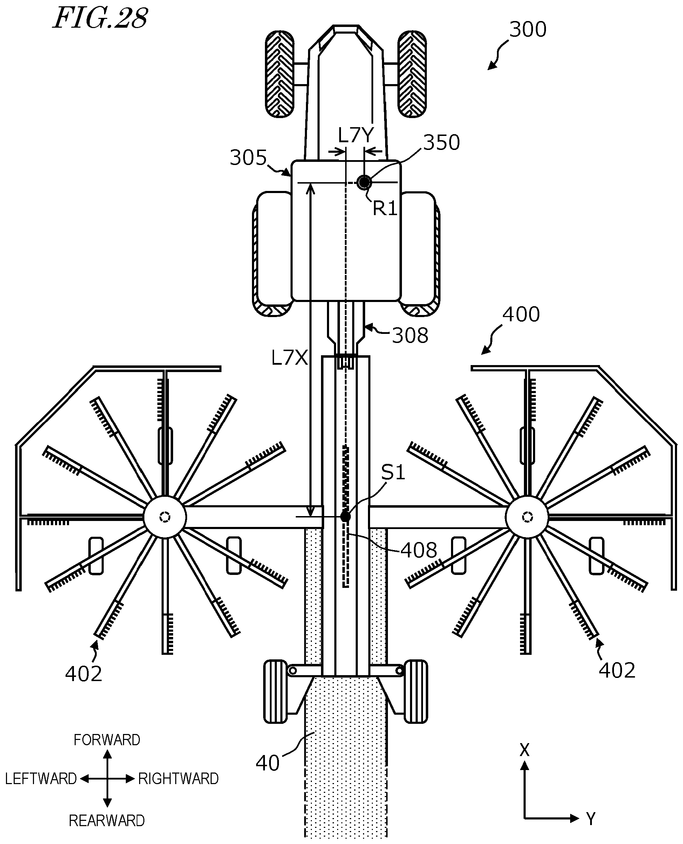

The above method of obtaining the positional relationship between the reference point **R1** and the position **S1** of the swath **40** in the local coordinate system is applicable to a rake implement **400** including two or more grass collectors **402.** FIG. **28** is a diagram illustrating the positional relationship between the reference point **R1** and the position **S1** of the swath 40 in the local coordinate system. In the example illustrated in FIG. 28, the rake implement 400 includes two grass collectors 402.

In the rake implement 400 of FIG. 28, the swath 40 is formed between the two grass collectors 402. A single swath 40 is formed from grass collected by the two grass collectors 402. For example, the position of a center in the transverse direction (the Y direction in the local coordinate system) of the swath 40 may be substantially the same as the position of a center in the lateral direction of the rake implement 400. A screen 408 is located at the position of a center in the lateral direction of the rake implement 400. The position S1 of the swath 40 is set at a position coinciding with the screen 408 as viewed from above.

As illustrated in FIG. 28, the position S1 of the swath 40 is located a length of L7Y to the left of the reference point R1 and a length of L7X behind the reference point R1. When the values of L7X and L7Y are known, the position of the swath 40 in the geographic coordinate system can be calculated from the position information of the reference point R1 detected by the positioning device 350.

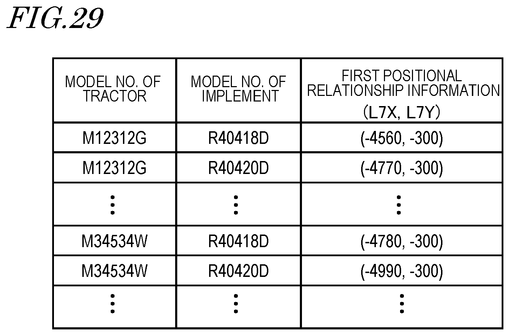

FIG. 29 is a diagram illustrating an example of first positional relationship information indicating a positional relationship (first positional relationship) between the reference point R1 and the position S1 of the swath 40 in the local coordinate system. The first positional relationship information of FIG. 29 indicates the positional relationship for each of combinations of a plurality of tractor models and a plurality of rake implement models.

As described above, the processor 111 of the server 100 can calculate the position S1 of the swath 40 in the geographic coordinate system, using the reference point position information, the azimuth information, and the first positional relationship information, to generate swath position information indicating the position of the swath 40 in the geographic coordinate system.

The positional relationship between the reference point R1 and the position S1 of the swath 40 may be obtained by a method different from that described above with reference to FIGS. 28 and 29. For example, the positional relationship between the reference point R1 and the position S1 of the swath 40 may be obtained by methods similar to those described above with reference to FIGS. 14 to 19.

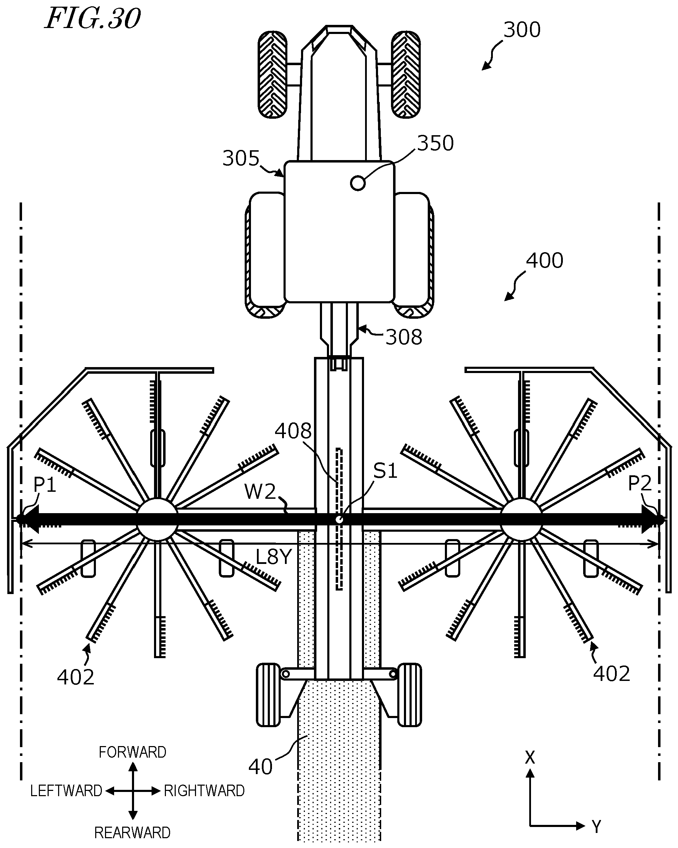

FIG. 30 is a diagram illustrating a range W2 in which the rake implement 400 including the two grass collectors 402 collects grass. The range W2 in which grass is collected is defined as the range between a position **P1** of of a left end of one of the grass collectors 402 and a position P2 of a right end of the other grass collector 402 in the lateral direction (Y direction) of the rake implement 400.

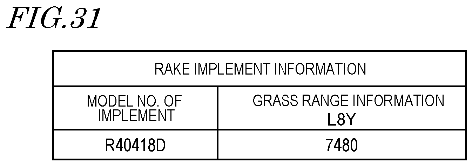

FIG. 31 is a diagram illustrating the rake implement information including grass range information. The grass range information indicates a length in the Y direction of the range W2 in which grass is collected in the local coordinate system. As described above, the processor 111 of the server 100 calculates the positions P1 and P2 of grass in the geographic coordinate system using the swath position information and the grass range information. The processor 111 can generate first swath information indicating a relationship between the position of the swath 40 and the position of grass collected to form the swath 40 in the geographic coordinate system. The processor 111 also generates second swath information in which the position of the swath 40 is associated with the grass information using the grass information and the first swath information.

Although it is assumed above that the processes described with reference to FIGS. 8 to 31 are mainly executed by the processing device 110 (FIG. 6) of the server 100, these processes may be executed by a processing device included in an apparatus other than the server 100. For example, the processes may be executed by the processing device 210 of the user terminal device 200 or the processing device 310 of the tractor 300.

In the above embodiments, the position information indicating the position S1 of the swath 40 is obtained using the position information of the reference point R1 detected by the positioning device 350 provided in the tractor 300. Alternatively, in the case in which a positioning device is provided in the rake implement 400, the position information indicating the position S1 of the swath 40 may be obtained using the positioning device provided in the rake implement 400. In that case, by setting the reference point and/or the reference position in the rake implement 400, the position information indicating the position S1 of the swath 40 can be obtained in a manner similar to that described above.

### Setting of Travel Path

Next, setting of a travel path for the tractor 300 and the baler 500 (FIG. 4) will be described. As described above, after the rake implement 400 forms the swath 40, the baler 500 collects grass contained in the swath 40, and forms the bale 50. In the work of forming the bale 50, the tractor 300 may be moved by automatic traveling or automatic steering while drawing the baler 500.

In the farming support system 10, the swath position information indicating the position in the geographic coordinate system of the swath 40 formed in the field, can be obtained using the above method. When the geographic coordinates of the swath 40 in the field are known, the travel path of the tractor 300 and the baler 500 for forming the bale 50 can be easily set.

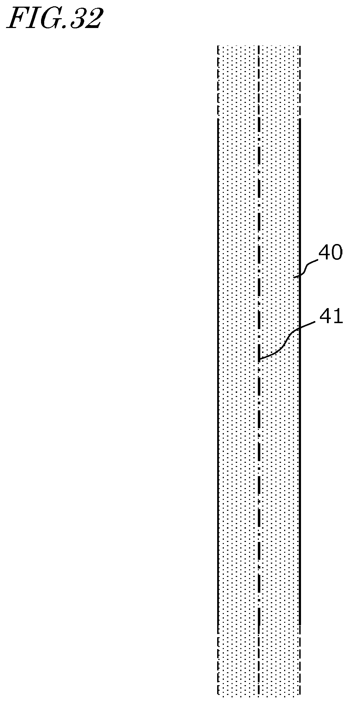

FIG. 32 is a diagram illustrating an example of the travel path for the tractor 300 and the baler 500. In the example illustrated in FIG. 32, the travel path 41 for the tractor 300 and the baler 500 passes through a center in the transverse direction of the swath 40. The transverse direction of the swath 40 is perpendicular to the direction in which the swath 40 extends in the field.

As described above with reference to FIG. 20, when the geographic coordinates of any position in the swath 40 in the transverse direction thereof are known, the geographic coordinates of other positions in the transverse direction can be calculated. The processor 111 of the server 100 calculates the geographic coordinates of a center in the transverse direction of the swath 40 using the swath position information. The processor 111 sets a line passing through the calculated geographic coordinates of a plurality of centers as the travel path 41. For example, the processor 111 sets a line passing through the geographic coordinates of centers of the swath 40 of FIG. 20 as the travel path 41. As a result, the travel path 41 that passes through substantially the center in the transverse direction of the swath 40 is set.

In the case in which two swaths **40i** and **40j** are joined together to form a single swath 40a (FIG. 12), the processor 111 may use the swath position information of one of the swaths **40i** and **40j.** As can be seen from FIG. 12, the position through which the screen 408 of the rake implement 400 passes is substantially the same as the position of the center in the transverse direction of the swath 40a. In other words, in the case in which the position S1 of the swath 40 is set at a position on the screen 408 that is opposite the grass collector **402,** the position S1 is substantially the same as the position of the center in the transverse direction of the swath 40a. In that case, the geographic coordinates of the position S1 can be used as the geographic coordinates of the center in the transverse direction of the swath 40a.

Although the swath 40 illustrated in FIG. 32 has a straight linear shape, at least a portion of the swath 40 may have a curved shape. For the portion having a curved shape, the geographic coordinates of the center of the swath 40 may be calculated for each set of geographic coordinates indicated by the swath position information, and a travel path that passes through the geographic coordinates of these centers may be set, whereby the tractor 300 and the baler 500 can be caused to travel, following the curved shape of the swath 40.

The processor 111 generates and outputs travel path information indicating the geographic coordinates of the set travel path 41 to the tractor 300. The processor 311 (FIG. 6) of the tractor 300 stores the received travel path information in the storage device 320 or the ROM 312.

### Specifying of Position Where Grass Is Picked Up

Next, a process of specifying a position in the geographic coordinate system of grass that is picked up by the baler 500 will be described. In order to identify the position in the field of grass in the swath 40 that is contained in the bale 50 formed by the baler 500, position information indicating the position in the geographic coordinate system of grass that is picked up by the baler 500 is generated. By associating the position information with the bale 50, the position in the field of grass in the swath 40 that is contained in the bale 50 can be identified.

As described above with reference to FIG. 4, the baler 500 picks up grass from the pick-up part 510. The position (reference point R1) detected by the positioning device 350 provided in the tractor 300 is different from the position where grass is picked up by the baler 500. Therefore, in this embodiment, the position information output by the positioning device 350 is corrected so as to specify a position where grass is picked up.

A plurality of types of balers are attachable to the tractor 300. The plurality of types of balers have different body sizes and different positions where grass is picked up. Therefore, the way to correct the position information may be changed, depending on the baler model.

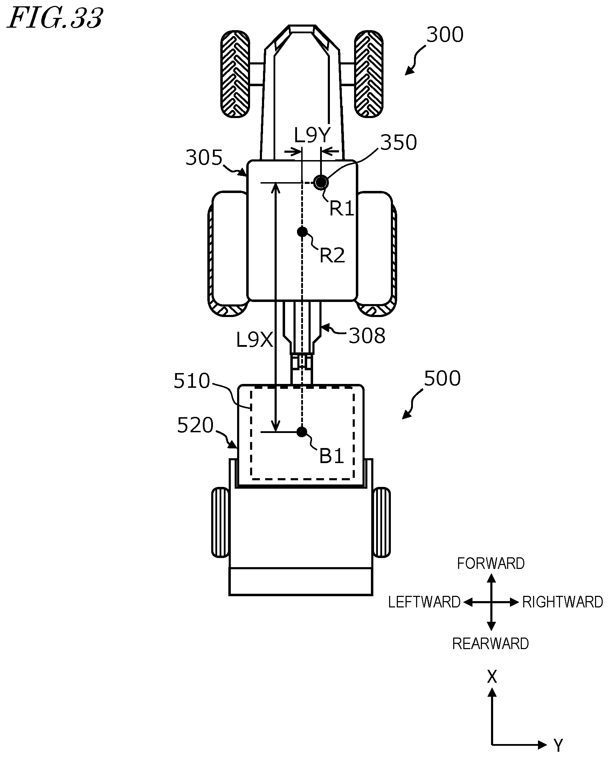

FIG. 33 is a diagram illustrating a positional relationship between the reference point R1 and a position (reference position B1) where the baler 500 picks up grass in the local coordinate system. The pick-up part 510 of the baler 500 picks up grass in a predetermined range in the lateral direction. The reference position B1 is set at a center of the predetermined range in the lateral direction. The reference position B1 may be the same as the position of the center in the lateral direction of the baler 500.

As illustrated in FIG. 33, the reference position **B1** is located a length of L9Y to the left of the reference point R1 and a length of L9X behind the reference point **R1**. When the values of L9X and L9Y are known, the geographic coordinates of the reference position B1 can be calculated from the position information of the reference point R1 detected by the positioning device 350.

The processor 111 of the server 100 initially obtains the work vehicle information about the tractor 300, and baler information about the baler 500 attached to the tractor 300. The baler information includes, for example, specific information that can be used to identify the model of the baler 500. The specific information includes, for example, the model number of the baler 500.

The baler information is previously stored in a storage device (e.g., the ROM 412 (FIG. 7)) in the baler 500. As described above, the tractor 300 and the baler 500 are capable of communication compliant with a communication control standard, such as ISOBUS.

When the baler 500 is attached to the tractor 300, the processor 411 of the baler 500 reads the baler information from the ROM 412, and outputs the baler information to the communication interface 430. The baler information is transmitted from the communication interface 430 to the communication interface 390 of the tractor 300. The communication interface 390 receives and outputs the baler information to the processor 311. The processor 311 outputs the received baler information to the server 100 through the communication interface 330.

Based on the work vehicle information and the baler information, the processor 111 obtains information indicating a positional relationship between the reference point R1 and the reference position B1 of the baler 500 in the local coordinate system that is defined for the tractor 300 and the baler 500 when the tractor 300 and the baler 500 are attached together.

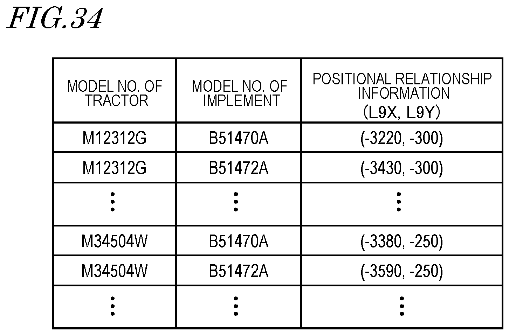

FIG. 34 is a diagram illustrating an example of second positional relationship information indicating the positional relationship (second positional relationship) between the reference point R1 and the reference position B1 in the local coordinate system. The second positional relationship information is previously stored in the storage device 120 of the server 100. When the model of the tractor and the model of the baler are known, the values of L9X and L9Y can be previously specified. For each of combinations of a plurality of tractor models and a plurality of baler models, the values of L9X and L9Y can be previously specified. The values of L9X and L9Y may be obtained by actual measurement, or may be calculated based on the design values. The model of each tractor and the model of each baler may, for example, be represented by a model number. The second positional relationship information of FIG. 34 indicates the positional relationship for each of combinations of a plurality of tractor models and a plurality of baler models. Because the positional relationship is based on the reference point R1, the values of L9X and L9Y are negative.

During the work of forming the bale 50 using the baler 500, the positioning device 350 detects the position of the reference point R1 in the geographic coordinate system, while the IMU 360 (FIG. 6) detects the azimuth of the travel direction of the tractor 300. The processor 311 of the tractor 300 generates the reference point position information indicating the position of the reference point R1 and the azimuth information indicating the azimuth of the travel direction using output signals of the positioning device 350 and the IMU 360.

The processor 311 calculates the geographic coordinates of the reference position B1 using the reference point position information, the azimuth information, and the second positional relationship information (FIG. 34).

The processor 311 and/or the ECU 370 (FIG. 6) of the tractor 300 control an operation of the drive device 380 of the tractor 300 such that the reference position B1 of the baler 500 passes through the position of the geographic coordinates indicated by the travel path information.

When the tractor 300 and the baler 500 are attached together and travel straight, the position (reference position R2) of the center in the lateral direction of the tractor 300 is substantially the same as the reference position B1 as illustrated in FIG. 33. Therefore, by controlling the operation of the drive device 380 such that the reference position R2 in the tractor 300 passes through the position of the geographic coordinates indicated by the travel path information, the reference position B1 of the baler 500 can be caused to pass through the position of the geographic coordinates indicated by the travel path information.

When the swath 40 has a curved shape and the tractor 300 follows the curved swath 40, the positional relationship between the reference position R2 and the reference position B1 that is taken when the tractor 300 is curving is calculated, and the tractor 300 can be caused to travel such that the reference position B1 passes through the position of the travel path 41. For example, information indicating the steering angle of the tractor 300 and the relationship between the reference positions R2 and **B1** may be previously stored in the storage device 120 of the server 100. The processor 311 of the tractor 300 may receive that information from the server 100, and obtain the positional relationship between the reference positions R2 and **B1** which corresponds to the steering angle.

The steering control and speed control of the tractor 300 may be implemented by a control technique such as a proportional-integral-derivative (PID) controller or model predictive control (MPC). By using these control techniques, the tractor 300 can be smoothly controlled to follow the travel path 41.

The baler 500 can be caused to travel along the travel path 41 passing through the center in the transverse direction of the swath 40, so that an appropriate positional relationship between the baler 500 and the swath 40 can be maintained, and therefore, the bale 50 can be efficiently formed.

The positional relationship between the reference point R1 and the reference position B1 in the local coordinate system may be obtained by a method different from that described above with reference to FIGS. 33 and 34. For example, the positional relationship between the reference point R1 and the reference position B1 may be obtained by methods similar to those described above with reference to FIGS. 14 to 19.

### Association of Bale Position with Grass Position

Next, a process of associating the position of the bale 50 with the position of grass will be described. If the position in the field from which the grass contained in the bale 50 was picked up is known, traceability can be achieved. In addition, by checking the growth state of the grass contained in the bale 50, the user can find a relationship between the position in the field and the growth state of the grass.

In the work of forming the bale 50, the tractor 300 travels along the set travel path 41 while drawing the baler 500. The operation of the baler 500 to form the bale 50 may be controlled by the processor 411 (FIG. 6) of the baler 500 and/or an ECU included in the baler 500. The processor 411 transmits a start signal indicating the start of formation of the bale 50 to the tractor 300 through the communication interface 430 with the timing of start of formation of the bale 50. The processor 411 also transmits an end signal indicating the end of formation of the bale 50 through the communication interface 430 with the timing of end of formation of the bale 50.

The processor 311 of the tractor 300 generates formation start time information indicating the time that the start signal was received, and stores the formation start time information in the storage device 320 or the ROM 312. The processor 311 also generates formation end time information indicating the time that the end signal was received, and stores the formation end time information in the storage device 320 or the ROM 312. The processor 311 outputs the formation start time information and the formation end time information to the server 100 through the communication interface 330.

In the work of forming the bale 50, the positioning device 350 detects the position of the reference point R1 in the geographic coordinate system, while the IMU 360 detects the azimuth of the travel direction of the tractor 300. The processor 311 generates the reference point position information indicating the position of the reference point R1 and the azimuth information indicating the azimuth of the travel direction using output signals of the positioning device 350 and the IMU 360. The processor 311 outputs, to the server 100, the reference point position information and the azimuth information together with time information indicating the time that the position and the azimuth of the travel direction of the reference point R1 were detected.

The processor 111 of the server 100 obtains the geographic coordinates of the reference point R1 that were taken at the time indicated by the formation start time information, using the reference point position information. For example, the processor 111 calculates the geographic coordinates of the reference point R1 that were taken at the time indicated by the formation start time information, based on a plurality of geographic coordinates indicated by the reference point position information and the times that the plurality of geographic coordinates were detected. The processor 111 calculates the geographic coordinates of the reference position B1 using the calculated geographic coordinates of the reference point R1, the azimuth information, and the second positional relationship information (FIG. 34). The geographic coordinates of the reference position B1 correspond to the geographic coordinates of the position where the baler 500 started formation of the bale 50.

Likewise, the processor 111 obtains the geographic coordinates of the reference point R1 that were taken at the time indicated by the formation end time information, using the reference point position information. The processor 111 calculates the geographic coordinates of the reference position B1 using the geographic coordinates of the reference point R1, the azimuth information, and the second positional relationship information. The geographic coordinates of the reference position B1 correspond to the geographic coordinates of the position where the baler 500 ended the formation of the bale 50.

The processor 111 generates bale position information indicating the geographic coordinates of the start position of the formation of the bale 50 and the geographic coordinates of the end position of the formation of the bale 50.

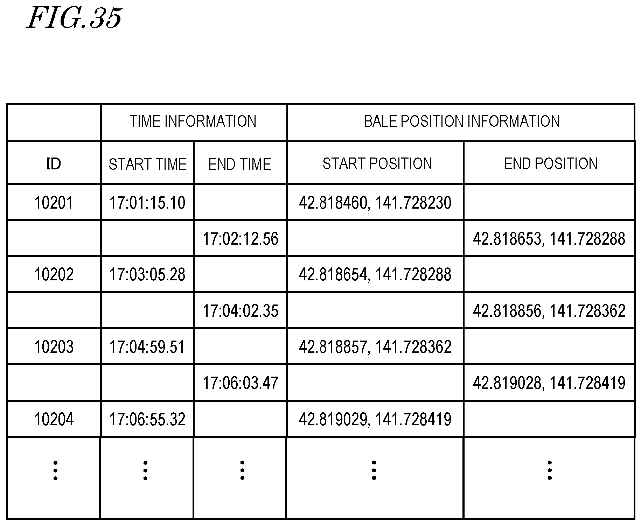

FIG. 35 is a diagram illustrating identification information of the bale 50, time information indicating the start time and end time of formation of the bale 50, and the bale position information. A bale 50 is formed by the baler 500 performing a series of operations from the start to end of formation of the bale 50. As described above, the formed bale 50 is discharged out of the baler 500 through the discharge opening 506 (FIG. 4). After discharging the bale 50, the baler 500 starts forming another bale 50. The processor 111 provides identification information to each bale 50. By associating the identification information of the bale 50 with the bale position information of the bale 50, it is possible to identify the position in the field where each bale 50 was formed.

As described above, in the case in which the travel path has undulations and slopes, the attitudes of the tractor 300 and the baler 500 may be tilted, so that a deviation may occur in geographic coordinates detected by the positioning device 350. The processor 111 may correct the geographic coordinates according to the magnitude of the tilt of the tractor 300 obtained from an output signal of the IMU 360.

Next, the processor 111 performs a process of associating the bale 50 with the position of grass.

When the position where the bale 50 was formed is known, the bale 50 can be associated with the position of grass using the above first swath information (FIG. 23). The first swath information indicates the relationship between the position of the swath 40 and the position of grass collected to form the swath 40 in the geographic coordinate system.

For example, the processor 111 extracts, from the first swath information, the geographic coordinates of the swath 40 that are closest to the geographic coordinates of the formation start position of the bale 50, and associates those geographic coordinates of the swath 40 with the formation start position of the bale 50. Likewise, the processor 111 extracts, from the first swath information, the geographic coordinates of the swath 40 that are closest to the geographic coordinates of the formation end position of the bale 50, and associates those geographic coordinates of the swath 40 with the formation end position of the bale 50.

The processor 111 extracts, from the first swath information, the geographic coordinates of the swath 40 located between the geographic coordinates of the swath 40 associated with the formation start position and the geographic coordinates of the swath 40 associated with the formation end position. The processor 111 extracts, from the first swath information, the geographic coordinates of the positions of grass associated with the extracted geographic coordinates of the swath 40. The processor 111 generates grass position information including the extracted geographic coordinates of the swath 40 and the extracted geographic coordinates of the positions of grass. The grass position information indicates the positions of the grass associated with the swath 40 located between the formation start position and formation end position of the bale 50.

The processor 111 generates first bale information in which the grass position information is associated with the identification information of the bale 50 having the formation start position and formation end position.

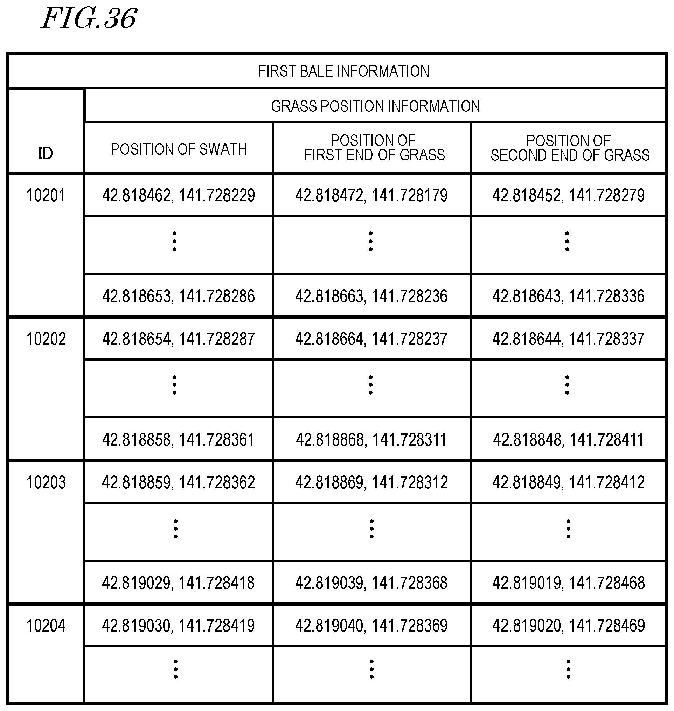

FIG. 36 is a diagram illustrating an example of the first bale information. The grass position information includes the geographic coordinates of a first end of grass and the geographic coordinates of a second end of the grass. The first end of grass indicates one end of the range in which grass was collected to form the swath 40, and the second end indicates the other end. The first bale information may include information about the date and time that the swath 40 used to form the bale 50 was formed. In the example illustrated in FIG. 36, the geographic coordinates of the first and second ends of the range in which grass was collected to form the swath 40a (FIG. 12) are indicated. As described above, in the case in which two swaths **40i** and **40j** are joined together to form a swath 40a, the first swath information of the swath 40i and the first swath information of the swath 40j can be combined together to generate the first swath information of the swath 40a. The first swath information of the swath 40a includes both information about the position of grass collected to form the swath 40i and information about the position of grass collected to form the swath 40j.

The association of the identification information of the bale 50 with the position of grass used to form the bale 50 allows the user to know the position in the field from which the grass contained in the bale 50 was picked up, and therefore, traceability can be achieved. In addition, by checking the state of the grass contained in the bale 50, the user can find a relationship between the position in the field and the growth state of the grass.

### Association of Bale with Grass Information

Next, a process of associating the bale 50 with the grass information will be described. As described above, the grass information includes information about the species, moisture content, growth state, etc., of grass. The association of the bale 50 with the grass information allows the user to know details of the grass contained in the bale 50.

When the position where the bale 50 was formed is known, the bale 50 can be associated with the grass information using the above second swath information (FIG. 27). The second swath information indicates the relationship between the position of the swath 40 in the geographic coordinate system and the grass information.

The geographic coordinates of the formation start position of bale 50 and the geographic coordinates of the formation end position of bale 50 can be obtained using the above method.

For example, the processor 111 extracts, from the second swath information, the geographic coordinates of the swath 40 that are closest to the geographic coordinates of the formation start position of the bale 50, and associates those geographic coordinates of the swath 40 with the formation start position of the bale 50. Likewise, the processor 111 extracts, from the second swath information, the geographic coordinates of the swath 40 that are closest to the geographic coordinates of the formation end position of the bale 50, and associates those geographic coordinates of the swath 40 with the formation end position of the bale 50.

The processor 111 extracts, from the second swath information, the geographic coordinates of the swath 40 located between the geographic coordinates of the swath 40 associated with the formation start position and the geographic coordinates of the swath 40 associated with the formation end position. The processor 111 extracts, from the second swath information, details of grass associated with the extracted geographic coordinates of the swath 40. The processor 111 generates grass information (second grass information) including the extracted geographic coordinates of the swath 40 and the extracted details of grass. The grass information indicates information about the grass associated with the swath 40 located between the formation start position and formation end position of the bale 50.

The processor 111 generates second bale information in which the identification information of bales 50 having respective pairs of a formation start position and a formation end position with the generated grass information.

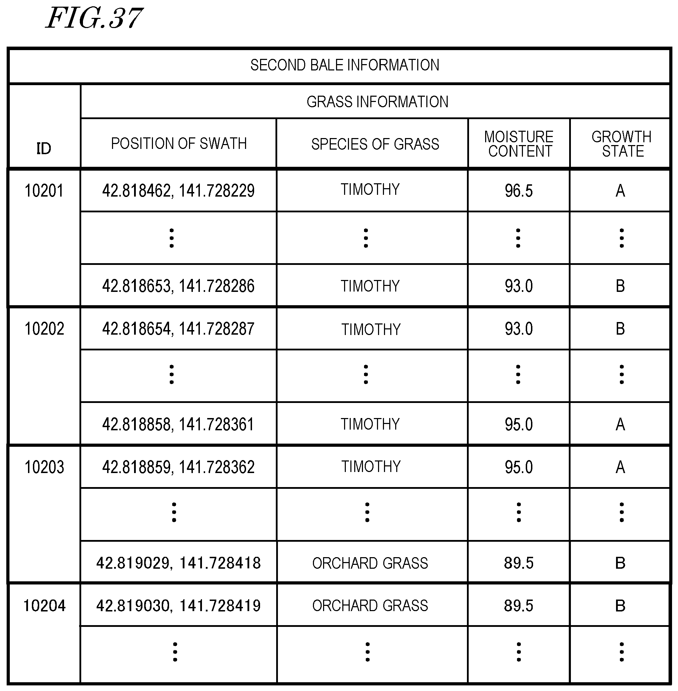

FIG. 37 is a diagram illustrating an example of the second bale information. The second bale information includes the identification information of each bale 50, the position of the swath 40 used to form the bale 50, and details of grass associated with the position of the swath 40. The details of grass associated with the position of the swath 40 correspond to the details of grass contained in the bale 50. The second bale information may include information about the date and time that the species, moisture content, growth state, etc., of grass were observed. The second bale information may also include information about the date and time that the swath 40 used to form the bale 50 was formed.

The association of the identification information of the bale 50 with information about grass used to form the bale 50 allows the user to know what kind of grass is contained in the bale 50. For example, the user is allowed to know the species, moisture content, growth state, etc., of grass contained in the bale 50.

The process of obtaining the formation start position and formation end position of the bale 50 in the geographic coordinate system, the process of associating the bale 50 with the position of grass, and the process of associating the bale 50 with the grass information, may be performed either during the work of forming the bale 50 or after completion of the work of forming the bale 50. In the case in which these processes are performed after completion of the work of forming the bale 50, the processor 311 (FIG. 6) of the tractor 300 stores various kinds of information such as the formation start time information, the formation end time information, the reference point position information, the azimuth information, and the time information in the storage device 320. After completion of the work of forming the bale 50, the processor 311 reads these kinds of information from the storage device 320, and outputs the information to the server 100. The processor 111 of the server 100 may perform the above processes using the received information.

Although in the foregoing, it is assumed that the processes described above with reference to FIGS. 32 to 37 are mainly executed by the processing device 110 (FIG. 6) of the server 100, those processes may be executed by a processing device included in an apparatus other than the server 100. For example, those processes may be executed by the processing device 210 of the user terminal device 200 or the processing device 310 of the tractor 300.

In the above embodiments, the position information of the reference position B1 of the baler 500 is obtained using the position information of the reference point R1 detected by the positioning device 350 provided in the tractor 300. Alternatively, in the case in which a positioning device is provided in the baler 500, the position information of the reference position B1 may be obtained using the positioning device provided in the baler 500. In that case, by setting the reference point and/or the reference position in the baler 500, the position information of the reference position B1 may be obtained in a manner similar to that described above.

A tractor 300 to which a rake implement 400 is attached, and a tractor 300 to which a baler 500 is attached, may be the same or different. In the case in which the same tractor 300 is used, the positioning device 350 provided in the tractor 300 can be used both for the work of forming the swath 40 and the work of forming the bale 50.

## Claims

1. A farming support system (10) comprising:
a first positioning device (350) provided in one of a work vehicle (300) and a rake implement (400) attachable to the work vehicle (300); and
a processing device (110, 210, 310) configured to obtain, based on rake implement information about the rake implement (400), a first positional relationship between a reference point (R1) to be positioned by the first positioning device (350) and a swath (40) to be formed by the rake implement (400), in a local coordinate system that is defined for the work vehicle (300) and the rake implement (400) which is attached to the work vehicle (300),
wherein
the processing device (110, 210, 310) is configured to generate swath position information indicating a position (S1) of the swath (40) in a geographic coordinate system, based on information indicating a position of the reference point (R1) in the geographic coordinate system detected by the first positioning device (350) during a work of forming the swath (40), and the first positional relationship,
**characterised in that** the rake implement information is stored in a storage device (412) included in the rake implement (400), and the system is configured to transmit the rake implement information from the rake implement (400) to the work vehicle (300) when the rake implement (400) is attached to the work vehicle (300), and the processing device (110, 210, 310) is configured to obtain the rake implement information from the work vehicle (300), or
the farming support system (10) further comprises a storage device (120, 220, 320) configured to store rake implement information about a plurality of models of the rake implements (400), wherein the system is configured so that model information indicating the model of the rake implement (400) is transmitted from the rake implement (400) to the work vehicle (300) when the rake implement (400) is attached to the work vehicle (300), the processing device (110, 210, 310) is configured to obtain the model information from the work vehicle (300), and the processing device (110, 210, 310) is configured to obtain, from the storage device (120, 220, 320), the rake implement information corresponding to the model indicated by the model information.

2. The farming support system (10) according to claim 1, wherein
the processing device (110, 210, 310) is configured to generate swath map information in which the swath position information is associated with map information of a field, and
a map of the field indicating the position (S1) of the swath (40) is displayed on a display device (250), based on the swath map information.

3. The farming support system (10) according to claim 1 or 2, wherein
the rake implement information includes information indicating a relationship between a reference position of the rake implement in a local coordinate system of the rake implement (400) and the position (S1) of the swath (40) to be formed by the rake implement (400),
the processing device (110, 210, 310) is configured to obtain first information indicating a relationship between the reference position of the rake implement (400) and the position of the reference point (R1), and
the processing device (110, 210, 310) is configured to determine the first positional relationship, based on the rake implement information and the first information.

4. The farming support system (10) according to claim 1 or 2, wherein
the first positioning device (350) is provided in the work vehicle (300),
the rake implement information includes information indicating a relationship between a reference position of the rake implement (400) in a local coordinate system of the rake implement (400), and the position (S1) of the swath (40) to be formed by the rake implement (400),
the processing device (110, 210, 310) is configured to obtain second information indicating a relationship between the reference point (R1) and a reference position of the work vehicle (300), and third information indicating a relationship between the reference position of the work vehicle (300) and the reference position of the rake implement (400), and
the processing device (110, 210, 310) is configured to determine the first positional relationship, based on the rake implement information, the second information, and the third information.

5. The farming support system according to any one of claims 1 to 4, further comprising:
a second positioning device (350) provided in one of the work vehicle (300) and a baler (500) attachable to the work vehicle (300),
wherein
the processing device (110, 210, 310) is configured to obtain, based on baler information about the baler (500), a second positional relationship between a reference point (R1) to be positioned by the second positioning device (350), and a position (B1) where the baler (500) picks up the swath, in a local coordinate system that is defined for the work vehicle (300) and the baler (500) which is attached to the work vehicle (300).

6. The farming support system (10) according to claim 5, wherein
the second positioning device (350) is provided in the work vehicle (300), and
the first and second positioning devices (350) are the same positioning device.

7. The farming support system (10) according to claim 5 or 6, wherein
the rake implement information includes information indicating a relationship between the position (S1) of the swath (40) to be formed by the rake implement (400) and a range in which the rake implement (400) collects grass to form the swath (40), in a local coordinate system of the rake implement (400), and
the processing device (110, 210, 310) is configured to generate first swath information indicating a relationship between the position (S1) of the formed swath (40) and a position of grass collected to form the swath (40), in the geographic coordinate system, based on the swath position information and the rake implement information.

8. The farming support system (10) according to claim 7, further comprising:
a storage device (120, 220, 320) configured to store first grass information about grass for each predetermined area of a field,
wherein
the processing device (110, 210, 310) is configured to generate second swath information in which the position of the formed swath (40) is associated with the first grass information, based on the first swath information and the first grass information.

9. The farming support system (10) according to claim 7, wherein
the processing device (110, 210, 310) is configured to obtain information about start and end of formation of a bale formed by the baler (500), and reference point information indicating a position of the reference point (R1) in the geographic coordinate system detected by the second positioning device (350) during a work of forming the bale,
the processing device (110, 210, 310) is configured to determine a formation start position and a formation end position of the bale in the geographic coordinate system, based on the information about the start and end of formation of the bale, the reference point information, and the second positional relationship,
the processing device (110, 210, 310) is configured to generate grass position information indicating a position of grass associated with the swath (40) located between the formation start position and the formation end position of the bale, based on the first swath information, and
the processing device (110, 210, 310) is configured to generate first bale information in which the bale is associated with the grass position information.

10. The farming support system (10) according to claim 8, wherein
the processing device (110, 210, 310) is configured to obtain information about start and end of formation of a bale formed by the baler (500), and reference point information indicating a position of the reference point (R1) in the geographic coordinate system detected by the second positioning device (350) during a work of forming the bale,
the processing device (110, 210, 310) is configured to determine a formation start position and a formation end position of the bale in the geographic coordinate system, based on the information about the start and end of formation of the bale, the reference point information, and the second positional relationship,
the processing device (110, 210, 310) is configured to generate second grass information about grass associated with the swath (40) located between the formation start position and the formation end position of the bale, based on the second swath information, and
the processing device (110, 210, 310) is configured to generate second bale information in which the bale is associated with the second grass information.

11. The farming support system (10) according to claim 9 or 10, wherein
the information about the start and end of formation of the bale includes information about a formation start time and a formation end time of the bale,
the processing device (110, 210, 310) is configured to determine the formation start position of the bale, based on a position of the reference point in the geographic coordinate system detected by the second positioning device at the formation start time, and
the processing device (110, 210, 310) is configured to determine the formation end position of the bale, based on a position of the reference point (R1) in the geographic coordinate system detected by the second positioning device (350) at the formation end **time.**

12. The farming support system (10) according to any one of claims 1 to 11, wherein
the processing device (110, 210, 310) is configured to set a travel path of a baler configured to form a bale, based on the swath position information.

13. The farming support system (10) according to claim 12, wherein
the processing device (110, 210, 310) is configured to set a line passing through a position of a center in a transverse direction of the formed swath (40), as a travel path for the baler (500), based on the swath position information.

## Patentansprüche

1. Landwirtschaftsunterstützungssystem (10), umfassend:
eine erste Positionierungsvorrichtung (350), die in einem von einem Arbeitsfahrzeug (300) und einem Rechenarbeitsgerät (400), das an das Arbeitsfahrzeug (300) anbringbar ist, bereitgestellt ist; und
eine Verarbeitungsvorrichtung (110, 210, 310), die konfiguriert ist, um basierend auf Rechenarbeitsgerätsinformationen über das Rechenarbeitsgerät (400) eine erste Positionsbeziehung zwischen einem Referenzpunkt (R1), der durch die erste Positionierungsvorrichtung (350) zu positionieren ist, und einer Schwade (40), die durch das Rechenarbeitsgerät (400) auszubilden ist, in einem lokalen Koordinatensystem zu erhalten, das für das Arbeitsfahrzeug (300) und das Rechenarbeitsgerät (400), das an dem Arbeitsfahrzeug (300) angebracht ist, definiert ist,
wobei
die Verarbeitungsvorrichtung (110, 210, 310) konfiguriert ist, um Schwadenpositionsinformationen, die eine Position (S1) der Schwade (40) in einem geografischen Koordinatensystem, basierend auf Informationen, die eine Position des Referenzpunkts (R1) in dem geografischen Koordinatensystem, die durch die erste Positionierungsvorrichtung (350) während eines Arbeitsvorgangs des Ausbildens der Schwade (40) erfasst wird, und der ersten Positionsbeziehung, angeben, zu generieren,
**dadurch gekennzeichnet, dass** die Rechenarbeitsgerätsinformationen in einer Speichervorrichtung (412) gespeichert sind, die in dem Rechenarbeitsgerät (400) eingeschlossen sind, und das System konfiguriert ist, um die Rechenarbeitsgerätsinformationen von dem Rechenarbeitsgerät(400) an das Arbeitsfahrzeug (300) zu übertragen, wenn das Rechenarbeitsgerät (400) an dem Arbeitsfahrzeug (300) angebracht ist, und die Verarbeitungsvorrichtung (110, 210, 310) konfiguriert ist, um die Rechenarbeitsgerätsinformationen von dem Arbeitsfahrzeug (300) zu erhalten oder
das Landwirtschaftsunterstützungssystem (10) ferner eine Speichervorrichtung (120, 220, 320), die konfiguriert ist, um Rechenarbeitsgerätsinformationen über eine Vielzahl von Modellen der Rechenarbeitsgeräte (400) zu speichern, umfasst, wobei das System so konfiguriert ist, dass Modellinformationen, die das Modell des Rechenarbeitsgeräts (400) angeben, von dem Rechenarbeitsgerät (400) an das Arbeitsfahrzeug (300) übertragen werden, wenn das Rechenarbeitsgerät (400) an dem Arbeitsfahrzeug (300) angebracht ist, die Verarbeitungsvorrichtung (110, 210, 310) konfiguriert ist, um die Modellinformationen von dem Arbeitsfahrzeug (300) zu erhalten, und die Verarbeitungsvorrichtung (110, 210, 310) konfiguriert ist, um von der Speichervorrichtung (120, 220, 320) die Rechenarbeitsgerätsinformationen zu erhalten, die dem durch die Modellinformationen angegebenen Modell entsprechen.

2. Landwirtschaftsunterstützungssystem (10) nach Anspruch 1, wobei
die Verarbeitungsvorrichtung (110, 210, 310) konfiguriert ist, um Schwadenabbildungsinfromationen zu generieren, in denen die Schwadenpositionsinformationen mit Abbildungsinformationen eines Feldes verknüpft sind, und
eine Abbildung des Feldes, die die Position (S1) der Schwade (40) angibt, auf einer Anzeigevorrichtung (250) basierend auf den Schwadenabbildungsinfromationen angezeigt wird.

3. Landwirtschaftsunterstützungssystem (10) nach Anspruch 1 oder 2, wobei
die Rechenarbeitsgerätsinformationen Informationen, die eine Beziehung zwischen einer Referenzposition des Rechenarbeitsgeräts in einem lokalen Koordinatensystem des Rechenarbeitsgeräts (400) und der Position (S1) der durch das Rechenarbeitsgerät (400) auszubildenden Schwade (40) angeben, einschließen,
die Verarbeitungsvorrichtung (110, 210, 310) konfiguriert ist, um erste Informationen, die eine Beziehung zwischen der Referenzposition des Rechenarbeitsgeräts (400) und der Position des Referenzpunkts (R1) angeben, zu erhalten, und
die Verarbeitungsvorrichtung (110, 210, 310) konfiguriert ist, um die erste Positionsbeziehung basierend auf den Rechenarbeitsgerätsinformationen und den ersten Informationen zu bestimmen.

4. Landwirtschaftsunterstützungssystem (10) nach Anspruch 1 oder 2, wobei
die erste Positionierungsvorrichtung (350) in dem Arbeitsfahrzeug (300) bereitgestellt ist,
die Rechenarbeitsgerätsinformationen Informationen, die eine Beziehung zwischen einer Referenzposition des Rechenarbeitsgeräts (400) in einem lokalen Koordinatensystem des Rechenarbeitsgeräts (400) und der Position (S1) der durch das Rechenarbeitsgerät (400) auszubildenden Schwade (40) angeben, einschließen,
die Verarbeitungsvorrichtung (110, 210, 310) konfiguriert ist, um zweite Informationen, die eine Beziehung zwischen dem Referenzpunkt (R1) und einer Referenzposition des Arbeitsfahrzeugs (300) angeben, und dritte Informationen, die eine Beziehung zwischen der Referenzposition des Arbeitsfahrzeugs (300) und der Referenzposition des Rechenarbeitsgeräts (400) angeben, zu erhalten, und
die Verarbeitungsvorrichtung (110, 210, 310) konfiguriert ist, um die erste Positionsbeziehung basierend auf den Rechenarbeitsgerätsinformationen, den zweiten Informationen und den dritten Informationen zu bestimmen.

5. Landwirtschaftsunterstützungssystem nach einem der Ansprüche 1 bis 4, ferner umfassend:
eine zweite Positionierungsvorrichtung (350), die in einem von dem Arbeitsfahrzeug (300) und einer Ballenpresse (500), die an dem Arbeitsfahrzeug (300) anbringbar ist, bereitgestellt ist,
wobei
die Verarbeitungsvorrichtung (110, 210, 310) konfiguriert ist, um basierend auf Ballenpresseninformationen über die Ballenpresse (500) eine zweite Positionsbeziehung zwischen einem Referenzpunkt (R1), der durch die zweite Positionierungsvorrichtung (350) zu positionieren ist, und einer Position (B1), an der die Ballenpresse (500) die Schwade aufnimmt, in einem lokalen Koordinatensystem zu erhalten, das für das Arbeitsfahrzeug (300) und die Ballenpresse (500), die an dem Arbeitsfahrzeug (300) angebracht ist, definiert ist.

6. Landwirtschaftsunterstützungssystem (10) nach Anspruch 5, wobei
die zweite Positionierungsvorrichtung (350) in dem Arbeitsfahrzeug (300) bereitgestellt ist, und
die erste und die zweite Positionierungsvorrichtung (350) dieselbe Positionierungsvorrichtung sind.

7. Landwirtschaftsunterstützungssystem (10) nach Anspruch 5 oder 6, wobei
die Rechenarbeitsgerätsinformationen Informationen, die eine Beziehung zwischen der Position (S1) der durch das Rechenarbeitsgerät (400) auszubildenden Schwade (40) und einem Bereich, in dem das Rechenarbeitsgerät (400) Gras sammelt, um die Schwade (40) auszubilden, in einem lokalen Koordinatensystem des Rechenarbeitsgeräts (400) angeben, einschließen, und
die Verarbeitungsvorrichtung (110, 210, 310) konfiguriert ist, um erste Schwadeninformationen, die eine Beziehung zwischen der Position (S1) der ausgebildeten Schwade (40) und einer Position von gesammeltem Gras, um die Schwade (40) auszubilden, in dem geografischen Koordinatensystem basierend auf den Schwadenpositionsinformationen und den Rechenarbeitsgerätsinformationen angeben, zu generieren.

8. Landwirtschaftsunterstützungssystem (10) nach Anspruch 7, ferner umfassend:
eine Speichervorrichtung (120, 220, 320), die konfiguriert ist, um erste Grasinformationen über Gras für jede vorbestimmten Fläche eines Feldes zu speichern,
wobei
die Verarbeitungsvorrichtung (110, 210, 310) konfiguriert ist, um zweiten Schwadeninformationen, in denen die Position der ausgebildeten Schwade (40) mit den ersten Grasinformationen, basierend auf den ersten Schwadeninformationen und den ersten Grasinformationen, verknüpft ist, zu generieren.

9. Landwirtschaftsunterstützungssystem (10) nach Anspruch 7, wobei
die Verarbeitungsvorrichtung (110, 210, 310) konfiguriert ist, um Informationen über Start und Ende der Ausbildung eines durch die Ballenpresse (500) ausgebildeten Ballens und Referenzpunktinformationen zu erhalten, die eine Position des Referenzpunkts (R1) in dem geografischen Koordinatensystem angeben, die durch die zweite Positionierungsvorrichtung (350) während eines Arbeitsvorgangs des Ausbildens des Ballens erfasst wird,
die Verarbeitungsvorrichtung (110, 210, 310) konfiguriert ist, um eine Ausbildungsstartposition und eine Ausbildungsendposition des Ballens in dem geografischen Koordinatensystem basierend auf den Informationen über den Start und das Ende der Ausbildung des Ballens, den Referenzpunktinformationen und der zweiten Positionsbeziehung zu bestimmen,
die Verarbeitungsvorrichtung (110, 210, 310) konfiguriert ist, um Graspositionsinformationen, die eine Position von Gras, das mit der Schwade (40) verknüpft ist, angeben, die sich zwischen der Ausbildungsstartposition und der Ausbildungsendposition des Ballens befindet, basierend auf den ersten Schwadeninformationen zu generieren, und
die Verarbeitungsvorrichtung (110, 210, 310) konfiguriert ist, um erste Balleninformationen, in denen der Ballen mit den Graspositionsinformationen verknüpft ist, zu generieren.

10. Landwirtschaftsunterstützungssystem (10) nach Anspruch 8, wobei
die Verarbeitungsvorrichtung (110, 210, 310) konfiguriert ist, um Informationen über Start und Ende der Ausbildung eines durch die Ballenpresse (500) ausgebildeten Ballens und Referenzpunktinformationen zu erhalten, die eine Position des Referenzpunkts (R1) in dem geografischen Koordinatensystem angeben, die durch die zweite Positionierungsvorrichtung (350) während eines Arbeitsvorgangs des Ausbildens des Ballens erfasst wird,
die Verarbeitungsvorrichtung (110, 210, 310) konfiguriert ist, um eine Ausbildungsstartposition und eine Ausbildungsendposition des Ballens in dem geografischen Koordinatensystem basierend auf den Informationen über den Start und das Ende der Ausbildung des Ballens, den Referenzpunktinformationen und der zweiten Positionsbeziehung zu bestimmen,
die Verarbeitungsvorrichtung (110, 210, 310) konfiguriert ist, um zweite Graspositionsinformationen über Gras, das mit der Schwade (40) verknüpft ist, angeben, die sich zwischen der Ausbildungsstartposition und der Ausbildungsendposition des Ballens befindet, basierend auf den zweiten Schwadeninformationen zu generieren, und
die Verarbeitungsvorrichtung (110, 210, 310) konfiguriert ist, um zweite Balleninformationen, in denen der Ballen mit den zweiten Grasinformationen verknüpft ist, zu generieren.

11. Landwirtschaftsunterstützungssystem (10) nach Anspruch 9 oder 10, wobei
die Information über den Start und das Ende der Ausbildung des Ballens Informationen über eine Ausbildungsstartzeit und eine Ausbildungsendzeit des Ballens einschließen,
die Verarbeitungsvorrichtung (110, 210, 310) dazu konfiguriert ist, um die Ausbildungsstartposition des Ballens basierend auf einer Position des Referenzpunkts in dem geografischen Koordinatensystem, die durch die zweite Positionierungsvorrichtung zur Ausbildungsstartzeit erfasst wird, zu bestimmen, und
die Verarbeitungsvorrichtung (110, 210, 310) konfiguriert ist, um die Ausbildungsendposition des Ballens basierend auf einer Position des Referenzpunkts (R1) in dem geografischen Koordinatensystem, die durch die zweite Positionierungsvorrichtung (350) zur Bildungsendzeit erfasst wird, zu bestimmen.

12. Landwirtschaftsunterstützungssystem (10) nach einem der Ansprüche 1 bis 11, wobei
die Verarbeitungsvorrichtung (110, 210, 310) konfiguriert ist, um einen Fahrweg einer Ballenpresse, die konfiguriert ist, um einen Ballen auszubilden, basierend auf den Schwadenpositionsinformationen festzulegen.

13. Landwirtschaftsunterstützungssystem (10) nach Anspruch
12, wobei
die Verarbeitungsvorrichtung (110, 210, 310) konfiguriert ist, um eine Linie, die durch eine Position einer Mitte in einer Querrichtung der ausgebildeten Schwade (40) verläuft, als einen Fahrweg für die Ballenpresse (500), basierend auf den Schwadenpositionsinformationen, festzulegen.

## Revendications

1. Système de support agricole (10) comprenant :
un premier dispositif de positionnement (350) fourni dans l'un parmi un véhicule de travail (300) et un outil de ratissage (400) pouvant être attaché au véhicule de travail (300) ; et
un dispositif de traitement (110, 210, 310) configuré pour obtenir, en fonction d'informations d'outil de ratissage concernant l'outil de ratissage (400), une première relation positionnelle entre un point de référence (R1) à positionner par le premier dispositif de positionnement (350) et un andain (40) à former par l'outil de ratissage (400), dans un système de coordonnées locales qui est défini pour le véhicule de travail (300) et l'outil de ratissage (400) qui est attaché au véhicule de travail (300),
dans lequel
le dispositif de traitement (110, 210, 310) est configuré pour générer des informations de position d'andain indiquant une position (S1) de l'andain (40) dans un système de coordonnées géographiques, en fonction d'informations indiquant une position du point de référence (R1) dans le système de coordonnées géographiques, détectée par le premier dispositif de positionnement (350) pendant un travail de formation de l'andain (40), et de la première relation positionnelle,
**caractérisé en ce que** les informations d'outil de ratissage sont stockées dans un dispositif de stockage (412) inclus dans l'outil de ratissage (400), et le système est configuré pour transmettre les informations d'outil de ratissage de l'outil de ratissage (400) au véhicule de travail (300) lorsque l'outil de ratissage (400) est attaché au véhicule de travail (300), et le dispositif de traitement (110, 210, 310) est configuré pour obtenir les informations d'outil de ratissage auprès du véhicule de travail (300), ou
le système de support agricole (10) comprend en outre un dispositif de stockage (120, 220, 320) configuré pour stocker des informations d'outil de ratissage concernant une pluralité de modèles des outils de ratissage (400), dans lequel le système est configuré de sorte que des informations de modèle indiquant le modèle de l'outil de ratissage (400) sont transmises de l'outil de ratissage (400) au véhicule de travail (300) lorsque l'outil de ratissage (400) est attaché au véhicule de travail (300), le dispositif de traitement (110, 210, 310) est configuré pour obtenir les informations de modèle auprès du véhicule de travail (300), et le dispositif de traitement (110, 210, 310) est configuré pour obtenir, auprès du dispositif de stockage (120, 220, 320), les informations d'outil de ratissage correspondant au modèle indiqué par les informations de modèle.

2. Système de support agricole (10) selon la revendication 1, dans lequel
le dispositif de traitement (110, 210, 310) est configuré pour générer des informations cartographiques d'andain dans lesquelles les informations de position d'andain sont associées à des informations cartographiques d'un champ, et
une carte du champ indiquant la position (S1) de l'andain (40) est affichée sur un dispositif d'affichage (250), en fonction des informations cartographiques d'andain.

3. Système de support agricole (10) selon la revendication 1 ou 2, dans lequel
les informations d'outil de ratissage comportent des informations indiquant une relation entre une position de référence de l'outil de ratissage dans un système de coordonnées locales de l'outil de ratissage (400) et la position (S1) de l'andain (40) à former par l'outil de ratissage (400),
le dispositif de traitement (110, 210, 310) est configuré pour obtenir des premières informations indiquant une relation entre la position de référence de l'outil de ratissage (400) et la position du point de référence (R1), et
le dispositif de traitement (110, 210, 310) est configuré pour déterminer la première relation positionnelle, en fonction des informations d'outil de ratissage et des premières informations.

4. Système de support agricole (10) selon la revendication 1 ou 2, dans lequel
le premier dispositif de positionnement (350) est fourni dans le véhicule de travail (300),
les informations d'outil de ratissage comportent des informations indiquant une relation entre une position de référence de l'outil de ratissage (400) dans un système de coordonnées locales de l'outil de ratissage (400) et la position (S1) de l'andain (40) à former par l'outil de ratissage (400),
le dispositif de traitement (110, 210, 310) est configuré pour obtenir des deuxièmes informations indiquant une relation entre le point de référence (R1) et une position de référence du véhicule de travail (300), et des troisièmes informations indiquant une relation entre la position de référence du véhicule de travail (300) et la position de référence de l'outil de ratissage (400), et
le dispositif de traitement (110, 210, 310) est configuré pour déterminer la première relation positionnelle, en fonction des informations d'outil de ratissage, des deuxièmes informations et des troisièmes informations.

5. Système de support agricole selon l'une quelconque des revendications 1 à 4, comprenant en outre :
un second dispositif de positionnement (350) fourni dans l'un parmi le véhicule de travail (300) et une presse à balles (500) pouvant être attachée au véhicule de travail (300),
dans lequel
le dispositif de traitement (110, 210, 310) est configuré pour obtenir, en fonction d'informations de presse à balles concernant la presse à balles (500), une seconde relation positionnelle entre un point de référence (R1) à positionner par le second dispositif de positionnement (350), et une position (B1) où la presse à balles (500) ramasse l'andain, dans un système de coordonnées locales qui est défini pour le véhicule de travail (300) et la presse à balles (500) qui est attachée au véhicule de travail (300).

6. Système de support agricole (10) selon la revendication 5, dans lequel
le second dispositif de positionnement (350) est fourni dans le véhicule de travail (300), et
les premier et second dispositifs de positionnement (350) sont le même dispositif de positionnement.

7. Système de support agricole (10) selon la revendication 5 ou 6, dans lequel
les informations d'outil de ratissage comportent des informations indiquant une relation entre la position (S1) de l'andain (40) à former par l'outil de ratissage (400) et une plage dans laquelle l'outil de ratissage (400) collecte de l'herbe pour former l'andain (40), dans un système de coordonnées locales de l'outil de ratissage (400), et
le dispositif de traitement (110, 210, 310) est configuré pour générer des premières informations d'andain indiquant une relation entre la position (S1) de l'andain (40) formé et une position de l'herbe collectée pour former l'andain (40), dans le système de coordonnées géographiques, en fonction des informations de position d'andain et des informations d'outil de ratissage.

8. Système de support agricole (10) selon la revendication 7, comprenant en outre :
un dispositif de stockage (120, 220, 320) configuré pour stocker des premières informations d'herbe concernant l'herbe pour chaque zone prédéterminée d'un champ,
dans lequel
le dispositif de traitement (110, 210, 310) est configuré pour générer des secondes informations d'andain dans lesquelles la position de l'andain (40) formé est associée aux premières informations d'herbe, en fonction des premières informations d'andain et de premières informations d'herbe.

9. Système de support agricole (10) selon la revendication 7, dans lequel
le dispositif de traitement (110, 210, 310) est configuré pour obtenir des informations concernant le début et la fin de formation d'une balle formée par la presse à balles (500), et des informations de point de référence indiquant une position du point de référence (R1) dans le système de coordonnées géographiques, détectée par le second dispositif de positionnement (350) pendant un travail de formation de la balle,
le dispositif de traitement (110, 210, 310) est configuré pour déterminer une position de début de formation et une position de fin de formation de la balle dans le système de coordonnées géographiques, en fonction des informations concernant le début et la fin de formation de la balle, des informations de point de référence et de la seconde relation positionnelle,
le dispositif de traitement (110, 210, 310) est configuré pour générer des informations de position d'herbe indiquant une position d'herbe associée à l'andain (40), localisée entre la position de début de formation et la position de fin de formation de la balle, en fonction des premières informations d'andain, et
le dispositif de traitement (110, 210, 310) est configuré pour générer des premières informations de balle dans lesquelles la balle est associée aux informations de position d'herbe.

10. Système de support agricole (10) selon la revendication 8, dans lequel
le dispositif de traitement (110, 210, 310) est configuré pour obtenir des informations concernant le début et la fin de formation d'une balle formée par la presse à balles (500), et des informations de point de référence indiquant une position du point de référence (R1) dans le système de coordonnées géographiques, détectée par le second dispositif de positionnement (350) pendant un travail de formation de la balle,
le dispositif de traitement (110, 210, 310) est configuré pour déterminer une position de début de formation et une position de fin de formation de la balle dans le système de coordonnées géographiques, en fonction des informations concernant le début et la fin de formation de la balle, des informations de point de référence et de la seconde relation positionnelle,
le dispositif de traitement (110, 210, 310) est configuré pour générer des secondes informations d'herbe concernant l'herbe associée à l'andain (40), localisée entre la position de début de formation et la position de fin de formation de la balle, en fonction des secondes informations d'andain, et
le dispositif de traitement (110, 210, 310) est configuré pour générer des secondes informations de balle dans lesquelles la balle est associée aux secondes informations d'herbe.

11. Système de support agricole (10) selon la revendication 9 ou 10, dans lequel
les informations concernant le début et la fin de formation de la balle comportent des informations concernant un moment de début de formation et un moment de fin de formation de la balle,
le dispositif de traitement (110, 210, 310) est configuré pour déterminer la position de début de formation de la balle, en fonction d'une position du point de référence dans le système de coordonnées géographiques, détectée par le second dispositif de positionnement au moment de début de formation, et
le dispositif de traitement (110, 210, 310) est configuré pour déterminer la position de fin de formation de la balle, en fonction d'une position du point de référence (R1) dans le système de coordonnées géographiques, détectée par le second dispositif de positionnement (350) au moment de fin de formation.

12. Système de support agricole (10) selon l'une quelconque des revendications 1 à 11, dans lequel
le dispositif de traitement (110, 210, 310) est configuré pour définir une trajectoire de déplacement d'une presse à balles conçue pour former une balle, en fonction des informations de position d'andain.

13. Système de support agricole (10) selon la revendication 12, dans lequel
le dispositif de traitement (110, 210, 310) est configuré pour définir une ligne passant à travers une position d'un centre dans une direction transversale de l'andain (40) formé, en tant que trajectoire de déplacement pour la presse à balles (500), en fonction des informations de position d'andain.
